# EUROPEAN PATENT APPLICATION

(11) **EP 4 510 509 A1**
(43) Date of publication of application: **19.02.2025**
(21) Application number: 22939402.8
(22) Date of filing: 29.04.2022
(51) Int. Cl.: H04L 12/00

(54) **ADDRESS ALLOCATION METHOD AND APPARATUS**

(71) Applicant: Huawei Technologies Co., Ltd., Shenzhen, Guangdong 518129 (CN)
(72) Inventor: WANG, Yali, Shenzhen, Guangdong 518129 (CN); ZHANG, Xudong, Shenzhen, Guangdong 518129 (CN); WANG, Jian, Shenzhen, Guangdong 518129 (CN)
(74) Representative: Maiwald GmbH
(86) International application number: PCT/CN2022/090762
(87) International publication number: WO 2023/206558

(57) **Abstract**

This application relates to an address allocation method. The method includes: receiving a first message sent by a node that applies for an address, where the first message includes a first type identifier, and the first type identifier indicates a first address type; sending a second message to the node, where the second message includes a first network address allocated to the first node or a service on the node, and an address type of the first network address is a first address type. This application can be used to implement allocation of a network address of a specified address type, and improve network address allocation efficiency.

## Description

### TECHNICAL FIELD

This application relates to the wireless communication field, and in particular, to an address allocation method and an apparatus.

### BACKGROUND

Wireless communication is widely used in scenarios such as smart cars, smart homes, smart terminals, and smart manufacturing. Compared with wired communication, wireless communication can effectively shorten harness, lighten harness, and reduce a quantity of connectors.

Generally, a dynamic host configuration protocol (Dynamic Host Configuration Protocol, DHCP) is typically used to dynamically allocate internet protocol IP addresses used for communication to nodes in a network. A node used to allocate an IP address is referred to as a DHCP server, and a node that needs to obtain the IP address is referred to as a DHCP client.

In the DHCP address allocation manner, after the DHCP client selects one network address from network addresses provided by a plurality of DHCP servers, each of the plurality of DHCP servers further needs to confirm whether the DHCP server is a selected DHCP server, and the selected DHCP server further needs to send an acknowledgment message to indicate that the network address is available to the DHCP client. Such an interaction process of address allocation is complex and time-consuming, reducing network address allocation efficiency.

### SUMMARY

This application discloses an address allocation method and an apparatus, to allocate a network address of a specified address type and improve network address allocation efficiency.

According to a first aspect, this application provides an address allocation method, where the method includes: receiving a first message sent by a first node, where the first message includes a first type identifier, and the first type identifier indicates a first address type; and sending a second message to the first node, where the second message includes a first network address allocated to the first node or a service on the first node, and an address type of the first network address is the first address type.

The method may be applied to scenarios such as vehicle-mounted communication, a smart home, and a battery management system (battery management system, BMS). In a vehicle-mounted communication scenario, the first node may be, for example, a user terminal in a vehicle or a component (for example, a board, a line card, or a chip) in a user terminal. The user terminal may be, for example, a mobile phone, a tablet computer, a palmtop computer, a desktop computer, an earphone, a speaker, a wearable device, a vehicle-mounted device, a virtual reality device, or an augmented reality device. A second node may be, for example, a telematics box (Telematics BOX, T-Box). In a smart home scenario, the first node may be, for example, a home device or a component in a home device. The home device may be, for example, a television, a floor scanning robot, a printer, a projector, a user mobile phone, a rice cooker, a speaker, a microphone, or a wireless router. A second node may be, for example, a gateway, a customer premises equipment (customer premises equipment, CPE), a wireless router, or a user mobile phone. In a BMS scenario, the first node may be, for example, a battery monitoring unit (battery monitoring unit, BMU). A second node may be, for example, a battery control unit (battery control unit, BCU) or a BMU.

In the foregoing method, a network address of a specified address type is provided for the first node or the service on the first node based on the first type identifier that indicates the first address type and that is carried in the first message. An interaction process of address allocation is simple, and network address allocation efficiency is improved.

Optionally, the method is applied to the second node, and the first node and the second node belong to a first communication domain.

For example, before the receiving a first message sent by a first node, the method further includes: receiving an access request sent by the first node; and accessing the first node based on the access request.

Optionally, the first address type is a communication domain address or an IP address.

The first address type is an address type to which the first network address expected to be allocated belongs. When the first address type is the communication domain address, the first network address is a network layer short address, a length of the first network address may be two bytes (that is, 16 bits), and the first network address may be used for addressing in a corresponding communication system. For example, for a SparkLink communication technology, the communication domain address may be used for addressing in a SparkLink communication system. It may be understood that the communication domain address is another address type different from the IP address.

In an implementation, when the first address type is the communication domain address, a length of the first network address may also be 8 bits, 24 bits, or another quantity of bits. This is not specifically limited herein.

In the foregoing implementation, an address type of a to-be-allocated network address may be learned based on the first address type.

Optionally, the method further includes: obtaining the first network address based on the first address type.

In the foregoing implementation, accurate allocation of the first network address is implemented by using the first address type.

Optionally, the first message further includes an identity of the first node, and the obtaining the first network address based on the first address type includes:
obtaining the first network address based on a first mapping relationship, where the first mapping relationship represents a mapping relationship among the identity of the first node, the first network address, and the first address type, where the first mapping relationship belongs to a set including a mapping relationship among an identity of a node to which a network address is allocated, the network address of the node, and an address type of the network address of the node.

The identity of the first node identifies the first node. For example, the identity of the first node may be a layer 2 identifier (Layer 2 Identification, L2ID).

In the foregoing implementation, when the first network address is obtained based on the first mapping relationship, it indicates that a network address of a same type has been historically allocated to the first node, and the network address is used as the first network address allocated to the first node, so that not only a waste of the network address can be avoided, but also an address conflict can be avoided.

Optionally, the first message further includes an identity of the first node and an identifier of a first service on the first node, and the obtaining the first network address based on the first address type includes:
obtaining the first network address based on a second mapping relationship, where the second mapping relationship represents a mapping relationship among the identity of the first node, the identifier of the first service, the first network address, and the first address type, where the second mapping relationship belongs to a set including a mapping relationship among an identifier of a service to which a network address is allocated, the network address of the service, an address type of the network address of the service, and an identity of a node on which the service is located.

In the foregoing implementation, when the first network address is obtained based on the second mapping relationship, it indicates that a network address of a same type has been historically allocated to the first service on the first node, and the network address is used as the first network address allocated to the first service, so that not only a waste of the network address can be avoided, but also an address conflict can be avoided.

Optionally, the obtaining the first network address based on the first address type includes: allocating the first network address based on the first address type.

Herein, the second node is a management node in the first communication domain.

That is, the second node may directly allocate the first network address to the first node or the first service on the first node. In a conventional DHCP address allocation manner, after a node selects a network address from network addresses provided by a plurality of DHCP servers, each of the plurality of DHCP servers further needs to determine whether the DHCP server is a selected DHCP server, and the selected DHCP server further needs to send an acknowledgment message to indicate that the node can use the address. An interaction process is complex and time-consuming. Compared with that in the conventional DHCP address allocation manner, the second node directly allocates the first network address, and a signaling interaction process in a DHCP acknowledgment stage is omitted. This shortens an interaction process of address allocation and improves address allocation efficiency.

Optionally, the first message further includes an identifier of a first service on the first node, and the obtaining the first network address based on the first address type includes: obtaining, based on the first address type and the identifier of the first service, the first network address allocated to the first service.

In the foregoing implementation, the first network address is allocated to the first service on the first node.

Optionally, when the first address type is the IP address, the method further includes: sending a third message to a dynamic host configuration protocol DHCP server, where the third message includes the first type identifier, and the third message further includes one or more of an identity of the following: the first node and an identifier of a first service on the first node; and receiving a fourth message sent by the DHCP server, where the fourth message includes the first network address, and the first network address is allocated by the DHCP server based on the third message.

In another implementation, alternatively, the second node may: send a third message to a plurality of DHCP servers, where the third message includes the first type identifier, and the third message further includes one or more of an identity of the first node and an identifier of a first service on the first node; receive fourth messages sent by the plurality of DHCP servers, where the fourth message corresponding to the DHCP server includes a first network address allocated by the DHCP server based on the third message; and obtain the first network address based on a fourth message sent by a target DHCP server in the plurality of DHCP servers. In this case, compared with that in the conventional DHCP address allocation manner, client's work of performing address selection and receiving the acknowledgment message from the DHCP server is offloaded to the second node. In this way, load of the first node can be reduced, a protocol stack on the first node is lightweight, and power consumption of the first node is reduced. The target DHCP server may be a DHCP server corresponding to a maximum signal strength, or may be a DHCP server corresponding to a fourth message first received by the second node, or may be a DHCP server corresponding to a highest priority, or may be determined by the second node based on a plurality of factors in a detected signal strength, priority information of the DHCP server, and a receiving moment corresponding to the third message. This is not specifically limited herein.

In an implementation, the third message includes all information related to allocation of the first network address in the first message.

For example, if the first message received by the second node includes the first type identifier and the identity of the first node, the third message also includes the first type identifier and the identity of the first node. In this case, the first network address is allocated by the DHCP server to the first node based on the third message.

For another example, if the first message received by the second node includes the first type identifier, the identity of the first node, and the identifier of the first service, the third message also includes the first type identifier, the identity of the first node, and the identifier of the first service. In this case, the first network address is allocated by the DHCP server to the first service on the first node based on the third message.

Further, when the first message received by the second node further includes other information related to address allocation, the third message further includes the same other information related to address allocation. For example, the other information related to address allocation further includes at least one of the following unicast address identification information, multicast address identification information, anycast address identification information, or quantity identification information. For details of each piece of information, refer to related descriptions of the following corresponding information. Details are not described herein again.

It may be understood that the second node sends the third message to the DHCP server, and the second node may be considered as a forwarding node. However, the second node does not directly forward or transparently transmit the first message, but sends, by sending the third message, information that is related to allocation of the first network address and that is in the first message.

In the foregoing implementation, when the second node is a management node in a communication domain but the second node does not have a DHCP function, the second node may further request, via the third message, the DHCP server to allocate the first network address to the first node or the first service on the first node. This enriches application scenarios of address allocation.

Optionally, the method further includes: sending a third message to a third node, where the third message includes the first type identifier, the third message further includes one or more of the following: an identity of the first node and an identifier of a first service on the first node, and the third node is a management node in the first communication domain; and receiving a fifth message sent by the third node, where the fifth message includes the first network address, and the first network address is allocated by the third node based on the third message.

For details of the third message, refer to related descriptions of the foregoing third message. Details are not described herein again.

In the foregoing implementation, the second node may further request, via the third message, the management node in the communication domain to allocate the first network address to the first node or the first service on the first node. This enriches application scenarios of address allocation.

Optionally, the first communication domain includes a plurality of management nodes, and the method further includes: sending a third message to the plurality of management nodes, where the third message includes the first type identifier, and the third message further includes one or more of the following: an identity of the first node and an identifier of a first service on the first node; receiving sixth messages sent by the plurality of management nodes, where the sixth message corresponding to the management node includes a network address allocated by the management node based on the third message; and obtaining the first network address based on a sixth message sent by a target management node in the plurality of management nodes.

For details of the third message, refer to related descriptions of the foregoing third message. Details are not described herein again.

For example, the target management node may be a management node corresponding to a highest priority, or may be a management node corresponding to a maximum signal strength, or may be a management node corresponding to a sixth message that is first received, or may be determined by the second node based on a plurality of factors in priority information of the management node, a detected signal strength, and a receiving moment of the sixth message. This is not specifically limited herein.

In the foregoing implementation, the second node may request, via the third message, the plurality of management nodes in the communication domain to allocate the first network address, and select, from first network addresses allocated by the plurality of management nodes, a first network address provided by one management node. This enriches application scenarios of address allocation.

Optionally, the first address type is the IP address, and the method further includes: obtaining a historically allocated second network address, where the second network address is a network address that is used by the first node in the first communication domain and whose address type is the communication domain address; and obtaining the first network address based on an IPv6 prefix of the first communication domain and the second network address.

In the foregoing implementation, the second network address that has been historically allocated to the first node and whose type is the communication domain address is used as an interface identifier of the first node, where the interface identifier is used to construct a local IPv6 address of the first node, so that consumption of an address quantity may be reduced, and it may be determined that the first network address allocated to a node 1 is not repeated.

Optionally, the first address type is the IP address, and the method further includes: allocating a second network address to the first node, where an address type of the second network address is a communication domain address; and obtaining the first network address based on an IPv6 prefix of the first communication domain and the second network address.

In the foregoing implementation, the second node may directly allocate the local IPv6 address to the first node. This enriches application scenarios of address allocation.

Optionally, the first address type is the IP address, and the method further includes: sending a third message to a fourth node, where the third message includes the first type identifier and an identity of the first node, and the fourth node is a management node in the first communication domain; and receiving a seventh message sent by the fourth node, where the seventh message includes the first network address that is allocated by the fourth node based on the third message, the first network address includes an IPv6 prefix of the first communication domain and a second network address, and the second network address is a network address that is used by the first node in the first communication domain and whose address type is the communication domain address.

In an implementation, the third message includes all information related to allocation of the first network address in the first message.

For example, in addition to the first type identifier and the identity of the first node, the first message received by the second node further includes other information related to allocation of the first network address, for example, one or more items of unicast address identification information, multicast address identification information, or quantity identification information. In this case, in addition to the first type identifier and the identity of the first node, the third message further includes the same other information related to allocation of the first network address. For specific descriptions of the unicast address identification information, the multicast address identification information, and the quantity identification information, refer to the following descriptions of corresponding information. This is not specifically limited herein.

In the foregoing implementation, the second node may request, via the third message, the management node in the communication domain to allocate the local IPv6 address to the first node. This enriches application scenarios of address allocation.

Optionally, the first message further includes at least one of the following information:
unicast address identification information, indicating that the first network address is a unicast address;
multicast address identification information, indicating that the first network address is a multicast address;
anycast address identification information, indicating that the first network address is an anycast address; or
quantity identification information, indicating a quantity of applied first network addresses.

The unicast address identification information is optional information in the first message. The unicast address identification information may be represented by using a flag bit, a field, or a bit. The flag bit is used as an example. When a corresponding flag bit is set, it indicates that the first network address is a unicast address. The second node may learn, via the unicast address identification information, that the first network address requested by the first node to allocate to the first node or the first service on the first node is used for unicast.

The multicast address identification information is optional information in the first message. The multicast address identification information may be represented by using a flag bit, a field, or a bit. The second node may learn, via the multicast address identification information, that the first network address requested by the first node to allocate to the first node or the first service on the first node is used for multicast.

Herein, the unicast address identification information and the multicast address identification information may be separately represented as described above, or may be represented by using one flag bit. For example, when the flag bit is a first value, it indicates that the first network address is used for unicast; or when the flag bit is a second value, it indicates that the first network address is used for multicast.

The anycast address identification information is optional information in the first message. The second node may learn, via the anycast address identification information, that the first network address requested by the first node to allocate to the first service on the first node is used for anycast.

If the first network address is allocated to the first node, the first network address may be a unicast address or a multicast address. If the first network address is allocated to the first service on the first node, the first network address may be a unicast address, a multicast address, or an anycast address (anycast address).

For example, the unicast address identification information, the multicast address identification information, and the anycast address identification information may be separately represented, or may be jointly represented by using one field, one flag bit, or the like. This is not specifically limited herein.

The quantity identification information is optional information in the first message. The quantity identification information corresponds to a quantity of identifiers of the first services in the first message. Specifically, a quantity of applied first network addresses is the same as the quantity of the identifiers of the first services. For example, the identifier of the first service included in the first message includes: an AID1, an AID2, and an AID3. This means that the first message is used to apply for allocating one first network address to each of the three services: AID1, AID2, and AID3, that is, a quantity of identifiers of the first services in the first message is 3. In this case, an applied quantity that is of the first network addresses and that is indicated by the quantity identification information is also 3. It can be learned that when there are a plurality of identifiers of the first services in the first message, the first message further includes quantity identification information. Corresponding network addresses may be allocated to a plurality of services on the first node via the quantity identification information.

When there are a plurality of identifiers of the first services in the first message, each identifier of the first service may alternatively have corresponding unicast address identification information, multicast address identification information, or anycast address identification information. In some possible embodiments, when the first network addresses corresponding to the plurality of identifiers of the first services are all used for unicast, multicast, or anycast, the first network addresses may alternatively be represented by using one flag bit.

Optionally, the method further includes: receiving an eighth message sent by the first node, where the eighth message includes a second type identifier, the second type identifier indicates a second address type, and the second address type is different from the first address type; and sending a ninth message to the first node, where the ninth message includes a third network address allocated to the first node or the service on the first node, and an address type of the third network address is the second address type.

In the foregoing implementation, network addresses of different address types may be allocated to the first node or the service on the first node.

According to a second aspect, this application provides an address allocation method, applied to a first node, where the method includes: sending a first message to a second node, where the first message includes a first type identifier, and the first type identifier indicates a first address type; receiving a second message sent by the second node, where the second message includes a first network address allocated to the first node or a service on the first node, and an address type of the first network address is the first address type; and obtaining the first network address based on the second message.

The method may be applied to scenarios such as vehicle-mounted communication, a smart home, and a battery management system (battery management system, BMS). In a vehicle-mounted communication scenario, the first node may be, for example, a user terminal in a vehicle or a component (for example, a board, a line card, or a chip) in a user terminal. The user terminal may be, for example, a mobile phone, a tablet computer, a palmtop computer, a desktop computer, an earphone, a speaker, a wearable device, a vehicle-mounted device, a virtual reality device, or an augmented reality device. The second node may be, for example, a telematics box (Telematics BOX, T-Box). In a smart home scenario, the first node may be, for example, a home device or a component in a home device. The home device may be, for example, a television, a floor scanning robot, a printer, a projector, a user mobile phone, a rice cooker, a speaker, a microphone, or a wireless router. The second node may be, for example, a gateway, a customer premises equipment (customer premises equipment, CPE), a wireless router, or a user mobile phone. In a BMS scenario, the first node may be, for example, a battery monitoring unit (battery monitoring unit, BMU), and the second node may be, for example, a battery control unit (battery control unit, BCU) or a BMU.

In the foregoing implementation, the address type is specified by using the first type identifier carried in the first message, and the network address that is of the specified address type and that is allocated to the first node or the service on the first node is obtained only from the second node accessed by the first node. An interaction process of address allocation is simple, and helps improve network address allocation efficiency.

Optionally, the first node and the second node belong to a first communication domain.

For example, before the sending a first message to a second node, the method further includes: receiving a broadcast message sent by the second node, where the broadcast message includes a service identifier, and the service identifier indicates that the second node provides an address allocation service; and sending an access request to the second node to request to access the second node.

In another implementation, before the sending a first message to a second node, the following may be performed: receiving a broadcast message sent by at least one node, where a broadcast message corresponding to a node includes a service identifier corresponding to the node, and the service identifier corresponding to the node indicates the node to provide an address allocation service; selecting the second node from the at least one node as an access point of the first node based on the broadcast message sent by the at least one node; and sending an access request to the second node to request to access the second node.

Further, the second node may be a node corresponding to a maximum signal strength, may be a node corresponding to a highest priority, or may be a node corresponding to a broadcast message first received by the first node, or may be determined by the first node from the at least one node based on a plurality of factors in a detected signal strength and a moment at which the first node receives a broadcast message. This is not specifically limited herein.

In the foregoing implementation, the first node can discover, in time, a node having an address allocation function, and determine a node uniquely accessed by the first node, so as to obtain only an allocated network address of a specified address type from the node.

Optionally, the first address type is a communication domain address or an IP address.

For specific descriptions of the first address type, refer to related descriptions of the first address type in the first aspect. Details are not described herein again.

Optionally, the first address type is the IP address, the first network address is an IPv6 address locally used by the first node, the first network address includes an IPv6 prefix of the first communication domain and a second network address, and the second network address is a network address that is used by the first node in the first communication domain and whose address type is the communication domain address.

In the foregoing implementation, the local IPv6 address is allocated to the first node, and a network address whose address type is the communication domain address and that is used by the first node in the first communication domain is used as an interface identifier of the first node, where the interface identifier is used to construct the local IPv6 address of the first node, so that consumption of an address quantity may be reduced.

Optionally, the first message further includes an identifier of a first service on the first node, and the first network address is allocated to the first service.

In the foregoing implementation, the network address of the specified address type may be applied for for the service on the first node. This enriches application scenarios of address allocation.

Optionally, the first message further includes at least one of the following information:
an identity of the first node;
unicast address identification information, indicating that the first network address is a unicast address;
multicast address identification information, indicating that the first network address is a multicast address;
anycast address identification information, indicating that the first network address is an anycast address; or
quantity identification information, indicating a quantity of applied first network addresses.

The identity of the first node identifies the first node. For example, the identity of the first node may be a layer 2 identifier (Layer 2 Identification, L2ID). For specific descriptions of the information in the first message, refer to related descriptions of the corresponding information in the first message in the first aspect. Details are not described herein again.

Optionally, the method further includes: sending a third message to the second node, where the third message includes a second type identifier, the second type identifier indicates a second address type, and the second address type is different from the first address type; receiving a fourth message sent by the second node, where the fourth message includes a third network address allocated to the first node or the service on the first node, and an address type of the third network address is the second address type; and obtaining the third network address based on the fourth message.

In the foregoing implementation, the first node may change the address type of the network address, so that the first node may flexibly obtain network addresses of different address types.

According to a third aspect, this application provides an address allocation apparatus. The apparatus includes: a receiving unit, configured to receive a first message sent by a first node, where the first message includes a first type identifier, and the first type identifier indicates a first address type; and a sending unit, configured to send a second message to the first node, where the second message includes a first network address allocated to the first node or a service on the first node, and an address type of the first network address is the first address type.

Optionally, the apparatus and the first node belong to a first communication domain.

In an implementation, the receiving unit is further configured to receive an access request sent by the first node. The apparatus further includes a processing unit, configured to access the first node based on the access request.

Optionally, the first address type is a communication domain address or an IP address.

Optionally, the processing unit is further configured to obtain the first network address based on the first address type.

Optionally, the first message further includes an identity of the first node, and the processing unit is specifically configured to: obtain the first network address based on a first mapping relationship, where the first mapping relationship represents a mapping relationship among the identity of the first node, the first network address, and the first address type, where the first mapping relationship belongs to a set including a mapping relationship among an identity of a node to which a network address is allocated, the network address of the node, and an address type of the network address of the node.

Optionally, the first message further includes an identity of the first node and an identifier of a first service on the first node, and the processing unit is specifically configured to: obtain the first network address based on a second mapping relationship, where the second mapping relationship represents a mapping relationship among the identity of the first node, the identifier of the first service, the first network address, and the first address type, where the second mapping relationship belongs to a set including a mapping relationship among an identifier of a service to which a network address is allocated, the network address of the service, an address type of the network address of the service, and an identity of a node on which the service is located.

Optionally, the processing unit is specifically configured to allocate the first network address based on the first address type.

Optionally, the first message further includes an identifier of a first service on the first node, and the processing unit is specifically configured to obtain, based on the first address type and the identifier of the first service, the first network address allocated to the first service.

Optionally, the first address type is the IP address. The sending unit is further configured to send a third message to a dynamic host configuration protocol DHCP server, where the third message includes the first type identifier, and the third message further includes one or more of the following: an identity of the first node and an identifier of a first service on the first node. The receiving unit is further configured to receive a fourth message sent by the DHCP server, where the fourth message includes the first network address, and the first network address is allocated by the DHCP server based on the third message.

Optionally, the sending unit is further configured to send a third message to a third node, where the third message includes the first type identifier, and the third message further includes one or more of the following: an identity of the first node and an identifier of a first service on the first node, and the third node is a management node in the first communication domain. The receiving unit is further configured to receive a fifth message sent by the third node, where the fifth message includes the first network address, and the first network address is allocated by the third node based on the third message.

Optionally, the first communication domain includes a plurality of management nodes. The sending unit is further configured to send a third message to the plurality of management nodes, where the third message includes the first type identifier, and the third message further includes one or more of the following: an identity of the first node and an identifier of a first service on the first node. The receiving unit is further configured to receive sixth messages sent by the plurality of management nodes, where the sixth message corresponding to the management node includes a network address allocated by the management node based on the third message. The processing unit is further configured to obtain the first network address based on a sixth message sent by a target management node in the plurality of management nodes.

Optionally, if the first address type is the IP address, the processing unit is further configured to obtain a historically allocated second network address, where the second network address is a network address that is used by the first node in the first communication domain and whose address type is the communication domain address; and obtain the first network address based on an IPv6 prefix of the first communication domain and the second network address.

Optionally, the first address type is the IP address. The processing unit is further configured to: allocate a second network address to the first node, where an address type of the second network address is a communication domain address; and obtain the first network address based on an IPv6 prefix of the first communication domain and the second network address.

Optionally, the first address type is the IP address. The sending unit is further configured to send a third message to a fourth node, where the third message includes the first type identifier and an identity of the first node, and the fourth node is a management node in the first communication domain. The receiving unit is further configured to receive a seventh message sent by the fourth node, where the seventh message includes the first network address that is allocated by the fourth node based on the third message, the first network address includes an IPv6 prefix of the first communication domain and a second network address, and the second network address is a network address that is used by the first node in the first communication domain and whose address type is the communication domain address.

Optionally, the first message further includes at least one of the following information:
unicast address identification information, indicating that the first network address is a unicast address;
multicast address identification information, indicating that the first network address is a multicast address;
anycast address identification information, indicating that the first network address is an anycast address; or
quantity identification information, indicating a quantity of applied first network addresses.

Optionally, the receiving unit is further configured to receive an eighth message sent by the first node, where the eighth message includes a second type identifier, the second type identifier indicates a second address type, and the second address type is different from the first address type. The sending unit is further configured to send a ninth message to the first node, where the ninth message includes a third network address allocated to the first node or the service on the first node, and an address type of the third network address is the second address type.

According to a fourth aspect, this application provides an address obtaining apparatus. The apparatus includes: a sending unit, configured to send a first message to a second node, where the first message includes a first type identifier, and the first type identifier indicates a first address type; a receiving unit, configured to receive a second message sent by the second node, where the second message includes a first network address allocated to the first node or a service on the first node, and an address type of the first network address is the first address type; and an obtaining unit, configured to obtain the first network address based on the second message.

Optionally, the first node and the second node belong to a first communication domain.

In an implementation, the receiving unit is further configured to receive a broadcast message sent by the second node, where the broadcast message includes a service identifier, and the service identifier indicates that the second node provides an address allocation service. The sending unit is further configured to send an access request to the second node to request to access the second node.

Optionally, the first address type is a communication domain address or an IP address.

Optionally, the first address type is the IP address, the first network address is an IPv6 address locally used by the first node, the first network address includes an IPv6 prefix of the first communication domain and a second network address, and the second network address is a network address that is used by the first node in the first communication domain and whose address type is the communication domain address.

Optionally, the first message further includes an identifier of a first service on the first node, and the first network address is allocated to the first service.

Optionally, the first message further includes at least one of the following information:
an identity of the first node;
unicast address identification information, indicating that the first network address is a unicast address;
multicast address identification information, indicating that the first network address is a multicast address;
anycast address identification information, indicating that the first network address is an anycast address; or
quantity identification information, indicating a quantity of applied first network addresses.

Optionally, the sending unit is further configured to send a third message to the second node, where the third message includes a second type identifier, the second type identifier indicates a second address type, and the second address type is different from the first address type. The receiving unit is further configured to receive a fourth message sent by the second node, where the fourth message includes a third network address allocated to the first node or the service on the first node, and an address type of the third network address is the second address type. The obtaining unit is further configured to obtain the third network address based on the fourth message.

According to a fifth aspect, this application provides an address allocation apparatus. The apparatus includes at least one processor and a communication interface. The communication interface is configured to provide information input and/or output for the at least one processor. The apparatus is configured to implement the method according to any one of the first aspect or the possible embodiments of the first aspect.

According to a sixth aspect, this application provides an address obtaining apparatus. The apparatus includes at least one processor and a communication interface. The communication interface is configured to provide information input and/or output for the at least one processor. The apparatus is configured to implement the method according to the second aspect or any possible implementation of the second aspect.

According to a seventh aspect, this application provides a computer-readable storage medium, including computer instructions. When the computer instructions are run by a processor, the method according to the first aspect or any possible implementation of the first aspect is implemented.

According to an eighth aspect, this application provides a computer-readable storage medium, including computer instructions. When the computer instructions are run by a processor, the method according to the second aspect or any possible implementation of the second aspect is implemented.

According to a ninth aspect, this application provides a computer program product. When the computer program product is executed by a processor, the method according to the first aspect or any possible implementation of the first aspect is implemented. For example, the computer program product may be a software installation package. When the method provided in any possible design of the first aspect needs to be used, the computer program product may be downloaded and executed on the processor, to implement the method according to the first aspect or any possible implementation of the first aspect.

According to a tenth aspect, this application provides a computer program product. When the computer program product is executed by a processor, the method according to the second aspect or any possible implementation of the second aspect is implemented. For example, the computer program product may be a software installation package. When the method provided in any possible design of the second aspect needs to be used, the computer program product may be downloaded and executed on the processor, to implement the method according to the second aspect or any possible implementation of the second aspect.

According to an eleventh aspect, this application provides a terminal. The terminal includes a first apparatus or a second apparatus, the first apparatus is the apparatus according to the fourth aspect or any possible implementation of the fourth aspect, or the apparatus according to the sixth aspect. The second apparatus is the apparatus according to the third aspect or any possible implementation of the third aspect, or the apparatus according to the fifth aspect.

Examples of the terminal include but are not limited to: a smart home device (for example, a television, a floor scanning robot, a smart desk lamp, a speaker system, an intelligent lighting system, an electrical control system, home background music, a home theater system, an intercom system, and video surveillance), smart transportation equipment (for example, an automobile, a ship, an uncrewed aerial vehicle, a train, a truck, and a lorry), smart manufacturing equipment (for example, a robot, industrial equipment, smart logistics, and a smart factory), and a smart terminal (a mobile phone, a computer, a tablet computer, a palmtop computer, a desktop computer, a headset, a speaker, a wearable device, a vehicle-mounted device, a virtual reality device, an augmented reality device, and the like)

According to a twelfth aspect, this application provides a communication system. The system includes a first apparatus and a second apparatus. The first apparatus is the apparatus according to the fourth aspect or any possible implementation of the fourth aspect, or the apparatus according to the sixth aspect. The second apparatus is the apparatus according to the third aspect or any possible implementation of the third aspect, or the apparatus according to the fifth aspect.

### BRIEF DESCRIPTION OF DRAWINGS

FIG. 1 is a diagram of some system architectures according to an embodiment of this application;
FIG. 2 is a diagram of a smart home wireless communication scenario according to an embodiment of this application;
FIG. 3 is a flowchart of an address allocation method according to an embodiment of this application;
FIG. 4 is a flowchart of another address allocation method according to an embodiment of this application;
FIG. 5 is a flowchart of another address allocation method according to an embodiment of this application;
FIG. 6 is a flowchart of another address allocation method according to an embodiment of this application;
FIG. 7 is a diagram of a structure of an address allocation apparatus according to an embodiment of this application;
FIG. 8 is a diagram of a structure of an address obtaining apparatus according to an embodiment of this application; and
FIG. 9 is a diagram of a structure of a communication apparatus according to an embodiment of this application.

### DESCRIPTION OF EMBODIMENTS

Terms used in embodiments of this application are merely for the purpose of describing specific embodiments, and are not intended to limit this application. In the specification and claims of this application, prefix words such as "first" and "second" are used only to distinguish between different described objects, and do not constitute any limitation on locations, a sequence, priorities, a quantity, content, or the like of the described objects. In embodiments of this application, use of the prefix words used to distinguish between the described objects does not constitute a limitation on the described objects. For descriptions of the described objects, refer to the context descriptions in the claims or embodiments, and use of the prefix words should not constitute a redundant limitation.

It should be noted that, in embodiments of this application, a description manner like "at least one (or at least one piece) of a1, a2, ..., or an" is used, including a case in which any one of a1, a2, ..., and an exists alone, and also including a case of any combination of a1, a2, ..., and an. Each case may exist alone. For example, a description manner of "at least one of a, b, or c" includes a case of a single a, a single b, a single c, a combination of a and b, a combination of a and c, a combination of b and c, or a combination of a, b, and c.

The following describes technical solutions of embodiments in this application with reference to accompanying drawings.

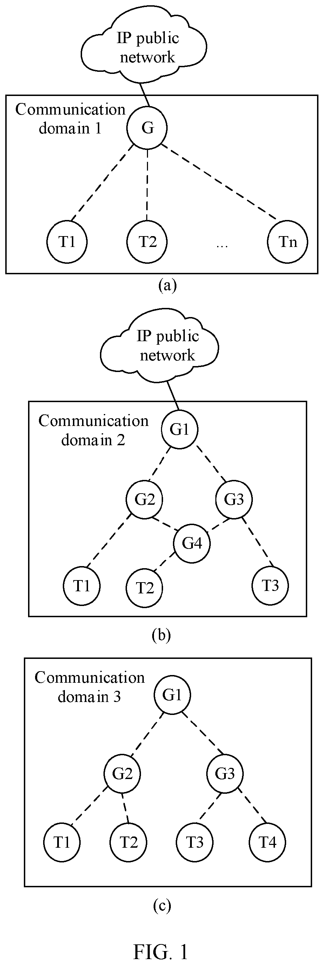

FIG. 1 is an example of a diagram of three system architectures to which embodiments of this application are applicable, for example, as shown in (a), (b), and (c) in FIG. 1.

A communication domain includes a plurality of communication devices. There is a communication connection relationship (that is, a communication link) between the communication devices, and the communication devices may exchange information over the communication link. The plurality of communication devices include at least one management node and at least one terminal node. The management node may also be referred to as a grant node (G node for short), the terminal node may also be referred to as a terminal node (T node for short). The G node is configured to send data scheduling information at an access layer of a communication system (for example, a SparkLink communication system). The T node is configured to receive data scheduling information at the access layer of the communication system, and send corresponding data based on the received data scheduling information.

(a) in FIG. 1 shows a star single-hop topology structure. In (a) in FIG. 1, a communication domain 1 includes a node G and a plurality of nodes T (for example, T1, T2, ..., and Tn), where the node G is an access point of each node T, the node G is a management node in the communication domain 1, and the node G may allocate an IP address to the node T, for example, the node G serves as a DHCP server to allocate the IP address to the node T, or the node G serves as an IP address allocation agent to request a DHCP server to allocate the IP address to the node T. In some possible embodiments, the communication domain 1 may be, for example, a SparkLink domain in a SparkLink communication system. In this case, the node G may further allocate a network address of a communication domain address type to the node T, to implement addressing in the SparkLink communication system. In (a) in FIG. 1, communication between the node G and the node T may be bidirectional unicast, or may be broadcast communication of G->T.

Optionally, an architecture shown in (a) in FIG. 1 is applicable to a vehicle-mounted communication scenario. For example, in the vehicle-mounted communication scenario, the node G may be a telematics box (Telematics BOX, T-Box), and the node T may be a user terminal in a vehicle, where the user terminal may be, for example, a mobile phone, a tablet computer, a palmtop computer, a desktop computer, an earphone, a speaker, a wearable device, a vehicle-mounted device, a virtual reality device, or an augmented reality device. The T-Box may also be referred to as a remote vehicle-mounted terminal or an internet of vehicles communication terminal. The T-Box is generally used as a wireless gateway to provide a remote communication interface for the entire vehicle, and provides services including driving data collection, driving track recording, vehicle fault monitoring, remote vehicle query and control, driving behavior analysis, and wireless hotspot sharing. For example, the T-Box can send collected vehicle data (for example, drive motor data, vehicle data, battery data, and status data of a new energy vehicle) to a cloud platform, and forward a control instruction received from the cloud platform to the vehicle. Alternatively, the T-Box may establish a transmission channel with a mobile phone app through Bluetooth to control door opening, door locking, vehicle window control, air conditioner switch, engine startup and shutdown, and the like.

(b) in FIG. 1 shows a tree-like multi-hop topology structure. In (b) in FIG. 1, a communication domain 2 includes nodes G1, G2, G3, G4, and nodes T1, T2, and T3, where the node G1 is connected to the nodes G2 and G3, the node G2 is further connected to the nodes T1 and G4, the node G3 is further connected to the nodes T3 and G4, and the node G4 is further connected to the node T2. It can be learned that the node G1 is an access point of the nodes G2 and G3; the node G2 is an access point of the nodes T1 and G4; the node G3 is an access point of the nodes T3 and G4; and the node G4 is an access point of the node T2. The node G1 is a management node in the communication domain 2, that is, the node G1 has an address allocation function, and may allocate a network address to another node in the communication domain 2. When the nodes G2, G3, and G4 have their own network addresses, the nodes G2, G3, G4 may have address allocation proxy service functions.

It may be understood that, in this communication scenario, the communication domain 2 includes the plurality of nodes G (which are the nodes G1, G2, G3, and G4) and the plurality of nodes T (which are the nodes T1, T2, and T3). The node G1 is a management node in the communication domain 2. The nodes G2, G3, and G4 are communication nodes with dual identities. The node G2 is used as an example. For communication between the node G2 and the node T1, the node G2 is used as a node G, and the node T1 is used as a node T. For communication between the node G2 and the node G1, the node G1 is used as a node G, and the node G2 is used as a node T. A communication node with dual identities, such as G2, may be denoted as G2 (T).

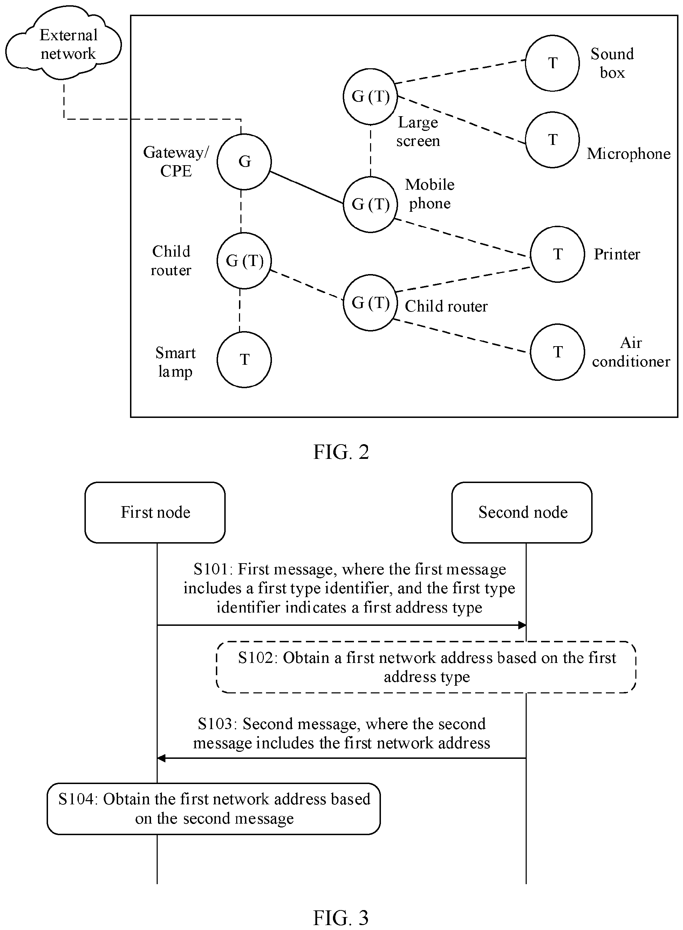

Optionally, an architecture shown in (b) in FIG. 1 is applicable to a smart home scenario. FIG. 2 is a diagram of a smart home wireless communication scenario according to an embodiment of this application. In FIG. 2, a node G has an IP capability, and the nodes G include a gateway/customer premises equipment (customer premises equipment, CPE), a child router, a mobile phone, and a large screen. A management node in a communication domain shown in FIG. 2 may be the gateway/customer premises equipment (customer premises equipment, CPE). Nodes G with dual identities may be the child router, the mobile phone, and the large screen. T nodes in FIG. 2 includes a smart lamp, an air conditioner, a printer, a microphone, and a sound box, where the T nodes not only include a node G supporting IP, for example, the printer, but also include nodes G not supporting IP, for example, the smart lamp and the air conditioner.

(c) in FIG. 1 shows a tree-like three-layer multi-hop topology structure. In (c) in FIG. 1, a communication domain 3 includes nodes G1, G2, and G3 and nodes T1, T2, T3, and T4, where the node G1 is connected to the nodes G2 and G3, that is, the node G1 is an access point of the nodes G2 and G3; the node G2 is connected to the nodes T1 and T2, that is, the node G2 is an access point of the nodes T1 and T2; and the node G3 is connected to the nodes T3 and T4, that is, the node G3 is an access point of the nodes T3 and T4. The node G1 serves as a management node in the communication domain 3, the node G1 may provide an address allocation service, and the nodes G2 and G3 may provide address allocation proxy services. In (b) and (c) in FIG. 1, communication between the node G and the node T may be bidirectional unicast of T->G (T)->G, or broadcast communication of G->G (T)->T.

Optionally, the architecture shown in (c) in FIG. 1 is applicable to a battery management system (battery management system, BMS). For example, in (c) in FIG. 1, the node G1 may be a battery control unit (battery control unit, BCU) in the BMS, the nodes T1, T2, T3, and T4 may be battery monitoring units (battery monitoring units, BMUs), and the nodes G2 and G3 may be BMUs having address allocation proxy service functions.

It should be noted that FIG. 1 is merely an example of an architectural diagram, and may alternatively be an architectural diagram in another form, for example, a diagram in a tree-like four-layer (or more layers) multi-hop topology structure. In addition to functional entities shown in FIG. 1, another functional entity may be included in FIG. 1 although it is not shown in FIG. 1. In addition, the method provided in embodiments of this application may be applied to a communication system shown in FIG. 1. Certainly, the method provided in embodiments of this application may alternatively be applied to another communication system. This is not limited in embodiments of this application.

FIG. 3 is a flowchart of an address allocation method according to an embodiment of this application. The method includes but is not limited to the following steps.

S101: A first node sends a first message to a second node, where the first message includes a first type identifier, and the first type identifier indicates a first address type.

Correspondingly, the second node receives the first message sent by the first node.

The first node and the second node belong to a first communication domain. The second node allows access of the first node based on an access request sent by the first node. In other words, the second node is an access point of the first node.

For example, in (a) in FIG. 1, the first node may be any node T in the nodes T1, T2, ..., and Tn, and the second node may be the node G.

For example, in (b) in FIG. 1, the first node may be any one of nodes T1, T2, and T3. If the first node is the node T1, the second node is the node G2. If the first node is the node T2, the second node is the node G4. If the first node is the node T3, the second node is the node G3. In some possible embodiments, when the nodes T1, T2, and T3 in (b) in FIG. 1 are not accessed, the first node may alternatively be the node G4, and the second node may be the node G2 or G3. In some possible embodiments, when the nodes T1, T2, T3, and G4 in (b) in FIG. 1 are not accessed, the first node may be the node G2 or G3, and the second node is the node G1.

For example, in (c) in FIG. 1, the first node may be any one of nodes T1, T2, T3, and T4. If the first node is T1 or T2, the second node is the node G2. If the first node is the node T3 or T4, the second node is the node G3. In some possible embodiments, when the nodes T1, T2, T3, and T4 in (c) in FIG. 1 are not accessed, the first node may be the node G2 or G3, and the second node is the node G1.

In this embodiment of this application, the first address type is a communication domain address or an IP address.

The first address type is an address type to which a first network address expected to be allocated belongs. When the first address type is the communication domain address, the first network address is a network layer short address, a length of the first network address may be two bytes (that is, 16 bits), and the first network address may be used for addressing in a corresponding communication system. For example, for a SparkLink communication technology, the communication domain address may be used for addressing in a SparkLink communication system. It may be understood that the communication domain address is another address type different from the IP address.

In some possible embodiments, when the first address type is the communication domain address, a length of the first network address may also be 8 bits, 24 bits, or another quantity of bits. This is not specifically limited herein.

For example, the first type identifier may indicate the first address type through bit mapping, a binary value, or in another manner. For example, when the first type identifier is a first value, the first address type is the communication domain address; or when the first type identifier is a second value, the first address type is the IP address.

Optionally, in some possible embodiments, before the first node sends the first message to the second node, the first node first performs the following step: determining that the second node is the access point of the first node.

In an implementation, determining that the second node is the access point of the first node includes: receiving a broadcast message sent by the second node, where the broadcast message includes a service identifier, and the service identifier indicates that the second node provides an address allocation service; and sending an access request to the second node to request to access the second node.

In another implementation, determining that the second node is the access point of the first node includes: receiving a broadcast message sent by at least one node, where the broadcast message corresponding to the node includes a service identifier corresponding to the node, and the service identifier corresponding to the node indicates that the node provides an address allocation service; selecting the second node from the at least one node as the access point of the first node based on a preset condition and the broadcast message sent by the at least one node; and sending an access request to the second node to request to access the second node.

The preset condition includes at least one of the following conditions:
(1) a node corresponding to a broadcast message that is first received serves as the second node;
(2) a node corresponding to a maximum signal strength serves as the second node; or
(3) a node having a highest priority serves as the second node.

For example, the first message may be carried on a common management transport channel, and the common management transport channel is a communication channel. It may be understood that, before the first node obtains an allocated network address, the first node may access the second node by establishing a default bearer to activate the common management transport channel. In some possible embodiments, the first message may alternatively be carried on another communication channel. This is not specifically limited herein.

In this embodiment of this application, the first message further includes an identity of the first node, and the identity of the first node identifies the first node. For example, the identity of the first node may be a layer 2 identifier (Layer 2 Identification, L2ID) of the first node. In this case, if the first message does not include an identifier of any service, it indicates that the first message is used to request to allocate the first network address of the first address type to the first node.

In some possible embodiments, the first message further includes an identifier of a first service on the first node. It indicates that the first message is used to request to allocate the first network address of the first address type to the first service on the first node.

S102: The second node obtains the first network address based on the first address type.

A type of the first network address is the first address type.

In this embodiment of this application, the first network address may be allocated to the first node, or may be allocated to a service (or referred to as an application) on the first node. The following specifically describes a process of allocating the first network address in the two cases.

First case: The first network address is allocated to the first node.

In this embodiment of this application, the first message further includes the identity of the first node, and obtaining the first network address based on the first address type includes: obtaining, based on the first address type and the identity of the first node, the first network address allocated to the first node.

In a specific implementation, obtaining the first network address based on the first address type and the identity of the first node includes: obtaining the first network address based on the first mapping relationship when first mapping information includes a first mapping relationship, where the first mapping relationship represents a mapping relationship among the identity of the first node, the first network address, and the first address type, and the first mapping information is a set including a mapping relationship among an identity of a node to which a network address is allocated, the network address of the node, and an address type of the network address of the node.

It may be understood that when the first mapping information includes the first mapping relationship, it indicates that the network address of the same type has been historically allocated to the first node, and the historically allocated network address of the same type is used as the first network address, so that a waste of the network address can be effectively avoided, and it may be further determined that the first network address allocated to the first node is not repeated, to prevent an address conflict.

The first mapping information is locally maintained by the second node. The first mapping information may be represented by using a table, a diagram, or the like.

For example, when the first mapping information is represented by using a mapping table, the mapping table may be in a form shown in Table 1. Specifically, Table 1 shows a mapping relationship among the identity of the node, the address type of the network address, and the network address of the node. When a value of the address type of the network address is "0", it indicates that the address type of the network address is the communication domain address; or when the value of the address type of the network address is "1", it indicates that the address type of the network address is the IP address. In Table 1, it can be learned, based on this mapping relationship "L2ID&1-0-address 1", that an address 1 whose address type is the communication domain address has been historically allocated to a node whose identity is L2ID&1. It can be learned, based on this mapping relationship "L2ID&1-1-address 2", that an address 2 whose address type is the IP address has been historically allocated to a node whose identity is L2ID&1. It can be learned, based on this mapping relationship "L2ID&3-0-address 3", that an address 3 whose address type is the communication domain address has been historically allocated to a node whose identity is L2ID&3.

It can be learned from Table 1 that network addresses of two types may have been historically allocated to a node (for example, a node whose identity is L2ID&1), or a network address of one type may be allocated to a node (for example, a node whose identity is L2ID&3), or no network address of any type has been historically allocated to a node (for example, a node whose identity is L2ID&3).

**Table 1**

| Identity of a node | Address type of a network address (0-communication domain address; 1-IP address) | Network address of the node |
|---|---|---|
| L2ID&1 | 0 | Address 1 |
| L2ID&1 | 1 | Address 2 |
| L2ID&3 | 0 | Address 3 |
| ... | ... | ... |

It may be understood that Table 1 is merely used as an example to reflect the correspondence among the identity of the node, the address type of the network address, and the network address of the node. In actual application, text content and a storage manner of the correspondence may alternatively be in another form. This is not specifically limited herein.

A process in which the second node allocates the first network address to the first node by searching for the first mapping information is specifically described based on Table 1. If the identity of the first node is "L2ID&1" and the value of the first type identifier is "1" (equivalent to that the first address type is a "communication domain address"), and the address 2 is used as the first network address allocated to the first node if it is found that the mapping relationship "L2ID&1-1-address 2" exists in Table 1.

In this embodiment of this application, when the first mapping information does not include the first mapping relationship, it indicates that the first network address of the first address type has not been historically allocated to the first node. In this case, for a specific allocation manner of the first network address, refer to the following manner A1 and manner A2.

### Manner A1: The second node is a management node in the first communication domain.

In an implementation, when the second node is the management node in the first communication domain, the second node allocates the first network address to the first node based on the first address type. The first address type may be a communication domain address or an IP address. For example, when the first address type is the IP address, the first network address may be specifically an IPv4 address or an IPv6 address.

In some possible embodiments, when the second node is the management node in the first communication domain and the first address type is the IP address, the second node may send a third message to a DHCP server, where the third message includes the first type identifier and the identity of the first node; and receive a fourth message sent by the DHCP server, where the fourth message includes the first network address allocated to the first node. In this case, the first network address is allocated by the DHCP server to the first node based on the third message. In other words, when the second node is the management node in the first communication domain and the first address type is the IP address, if the second node does not have the DHCP function, the second node may request, via the third message, the DHCP server to allocate, to the first node, the first network address whose first address type is the IP address.

It can be learned that when the second node is the management node in the first communication domain:
(1) when the first address type is the communication domain address, the first network address of the first node is allocated by the second node;
(2) when the first address type is the IP address, the first network address of the first node is allocated by the second node (when the second node has the DHCP function), or the first network address of the first node is allocated by the DHCP server (when the second node does not have the DHCP function) by using the second node.

For example, referring to FIG. 1, the first node and the second node may meet any one of the following cases:
(1) in (a) in FIG. 1, the first node is any node T, and the second node is the node G;
(2) in (b) in FIG. 1, the first node is the node G2 or G3, and the second node is the node G1; and
(3) in (c) in FIG. 1, the first node is the node G2 or G3, and the second node is the node G1.

### Manner A2: The second node is not a management node in the first communication domain.

In an implementation, when the second node is not the management node in the first communication domain, the second node sends a third message to a third node, where the third message includes the first type identifier and the identity of the first node, and the third node is the management node in the first communication domain; and receives a fifth message sent by the third node, where the fifth message includes the first network address allocated to the first node. In this case, the first network address is allocated by the management node to the first node based on the third message.

In another implementation, there are a plurality of management nodes in the first communication domain, and when the second node is not the management node in the first communication domain, the second node sends a third message to the plurality of management nodes, where the third message includes the first type identifier and the identity of the first node; receives sixth messages sent by the plurality of management nodes, where the sixth message corresponding to the management node includes a network address allocated by the management node to the first node based on the third message; selects a target management node from the plurality of management nodes; and obtains the first network address based on a sixth message sent by the target management node.

For example, the target management node selected by the second node meets at least one of the following conditions:
(1) a management node whose priority exceeds a preset level;
(2) a management node corresponding to a sixth message first received by the second node; or
(3) a management node whose signal strength exceeds a preset threshold.

For example, the target management node may be a management node having a highest priority, or may be a management node corresponding to a maximum signal strength. This is not specifically limited herein.

In some possible embodiments, when there are a plurality of management nodes in the first communication domain, after the second node selects the target management node, the second node may further broadcast a response message, where the response message indicates that the second node has selected a network address provided by the target management node. In this way, the target management node that receives the response message may store a mapping relationship among the network address allocated to the first node, the first address type, and the identity of the first node, and another management node that receives the response message may learn that a network address provided by the another management node is not selected by the second node. In this way, the provided network address may be reclaimed, to avoid an address waste.

In the foregoing two implementations, the type of the first network address may be the communication domain address, or may be the IP address. This is not specifically limited herein. For example, when the first address type is the IP address, the first network address may be specifically an IPv4 address or an IPv6 address.

It can be learned that when the second node is not the management node in the first communication domain:
(1) when there is only one management node in the first communication domain, the second node sends the third message to the management node, and in this case, the first network address is allocated by the management node to the first node by using the second node;
(2) when there are a plurality of management nodes in the first communication domain, the second node may broadcast the third message to the plurality of management nodes, and select, from network addresses provided by the plurality of management nodes, a network address provided by one management node as the first network address allocated to the first node.

For example, referring to FIG. 1, the first node and the second node meet any one of the following cases:
(1) in (b) in FIG. 1, the first node is the node T1 or G4, and the second node is the node G2;
(2) in (b) in FIG. 1, the first node is the node T2, and the second node is the node G4;
(3) in (b) in FIG. 1, the first node is the node G4 or T3, and the second node is the node G3;
(4) in (c) in FIG. 1, the first node is the node T1 or T2, and the second node is the node G2; and
(5) in (c) in FIG. 1, the first node is the node T3 or T4, and the second node is the node G3.

In (b) in FIG. 1, the third node is the node G1, and in (c) in FIG. 1, the third node is the node G1.

In some possible embodiments, if the first mapping information does not include the first mapping relationship, when the second node obtains the first network address allocated to the first node, the second node may further add the mapping relationship among the identity of the first node, the first address type, and the first network address to the first mapping information. For example, it is assumed that the identity of the first node is "L2ID&2" and the first address type is "communication domain address". After querying Table 1 based on the identity of the first node and the first address type, the second node determines that the first mapping relationship does not exist in Table 1. In this case, the second node obtains, in the foregoing manner A1 or manner A2, the first network address (assumed to be "Address 4") allocated to the first node, and the second node may add this mapping relationship "L2ID&2-0-address 4" to the foregoing Table 1.

In some possible embodiments, when the first address type is the IP address, the first network address may alternatively be a local IPv6 address allocated to the first node. In this case, for allocation of the first network address, refer to the following two implementations.

In an implementation, when the first address type is the IP address, the second node obtains a historically allocated second network address, where the second network address is a network address that is used by the first node in the first communication domain and whose address type is the communication domain address; and obtains, based on an IPv6 prefix of the first communication domain and the second network address, the first network address allocated to the first node. In this way, the second network address that has been historically allocated to the first node and whose address type is the communication domain address is used as an interface identifier of the first node, and the interface identifier is used to construct the local IPv6 address of the first node, so that consumption of an address quantity may be reduced, and it may be determined that the first network address allocated to the first node is not repeated, to prevent an address conflict.

In another implementation, when the second network address that is used by the first node in the first communication domain and whose address type is the communication domain address is historically unallocated, based on whether the second node is the management node in the first communication domain, allocation of the local IPv6 address of the first node may be further divided into the following case 1 and case 2.

### Case 1:

When the second node is the management node in the first communication domain, the second node allocates the second network address to the first node, and obtains, based on an IPv6 prefix of the first communication domain and the second network address, the first network address allocated to the first node.

### Case 2:

When the second node is not the management node in the first communication domain, the second node sends a third message to the management node in the first communication domain, where the third message includes the first type identifier and the identity of the first node; and receives a seventh message sent by the management node in the first communication domain, where the seventh message includes the first network address allocated by the management node based on the third message, the first network address includes an IPv6 prefix of the first communication domain and the second network address allocated to the first node, and the address type of the second network address is the communication domain address. Therefore, the second node obtains the first network address allocated to the first node. It can be learned that the management node in the first communication domain may allocate the local IPv6 address to the first node by using the second node, so as to support the first node in accessing the network by using a multi-hop radio link.

In an implementation, the third message includes all information related to allocation of the first network address in the first message.

For example, if the first message received by the second node includes the first type identifier and the identity of the first node, the third message sent by the second node also includes the first type identifier and the identity of the first node.

For example, in addition to the first type identifier and the identity of the first node, the first message received by the second node further includes other information related to allocation of the first network address, for example, one or more items of unicast address identification information, multicast address identification information, or quantity identification information. In this case, in addition to the first type identifier and the identity of the first node, the third message further includes the same other information related to allocation of the first network address. For specific descriptions of the unicast address identification information, the multicast address identification information, and the quantity identification information, refer to the following descriptions of corresponding information. This is not specifically limited herein.

It may be understood that, in the foregoing embodiment, the second node sends the third message to the DHCP server or the management node in the first communication domain, and the second node may be considered as a forwarding node. However, the second node does not directly forward or transparently transmit the first message, but sends information that is related to allocation of the first network address and that is in the first message by sending the third message.

For example, it may be determined, based on the first mapping information, whether the second network address that is used by the first node in the first communication domain and whose address type is the communication domain address has been allocated. Specifically, when the first mapping information includes a third mapping relationship, it indicates that the second network address has been historically allocated, where the third mapping relationship represents the mapping relationship among the identity of the first node, the first network address, and the type of the communication domain address. When the first mapping information does not include the third mapping relationship, it indicates that the second network address has not been historically allocated.

Second case: The first network address is allocated to the service on the first node.

In this embodiment of this application, the first message further includes an identifier of a first service on the first node, and obtaining the first network address based on the first address type includes: obtaining, based on the first address type and the identifier of the first service, the first network address allocated to the first service.

In a specific implementation, obtaining the first network address based on the first address type and the identifier of the first service includes: when second mapping information includes a second mapping relationship, obtaining the first network address based on the second mapping relationship, where the second mapping relationship represents a mapping relationship among the identity of the first node, the identifier of the first service, the first network address, and the first address type, and the second mapping information is a set including a mapping relationship among an identifier of a service to which a network address is allocated, the network address of the service, a type identifier of the network address of the service, and an identity of a node on which the service is located.

It may be understood that when the second mapping information includes the second mapping relationship, it indicates that the network address of the same type has been historically allocated to the first service on the first node, and the historically allocated network address of the same type is used as the first network address, so that not only a waste of the network address can be effectively avoided, and it may be further determined that the first network address allocated to the first service on the first node is not repeated.

The second mapping information is locally maintained by the second node. The second mapping information may be represented by using a table, a diagram, or the like.

For example, when the second mapping information is represented by using a mapping table, the second mapping information may be represented in a form shown in Table 2. Specifically, Table 2 shows a mapping relationship among an identity of a node, an identifier of a service, an address type of a network address, and a network address of a service, where when a value of the address type of the network address is "0", it indicates that the address type of the network address is a communication domain address, and when the value of the address type of the network address is 1, it indicates that the address type of the network address is the IP address. In Table 2, it can be learned, based on this mapping relationship "L2ID&1-AID1-0-address 1", that an address 11 whose address type is the communication domain address has been historically allocated to a service AID1 on a node whose identity is L2ID&1. It can be learned, based on this mapping relationship "L2ID&1-AID2-1-address 12", that an address 12 whose address type is the IP address has been historically allocated to a service AID2 on a node whose identity is L2ID&1. It can be learned, based on this mapping relationship "L2ID&3-AID1-0-address 13", that an address 13 whose address type is the communication domain address has been historically allocated to a service AID1 on a node whose identity is L2ID&3.

It can be learned from Table 2 that different services on a same node may have network addresses of different address types, and a same service on different nodes may have network addresses of a same address type. In some possible embodiments, a same service on a same node may also have network addresses of two different address types, and address types of network addresses of a same service on different nodes may also be different. This is not specifically limited herein. It may be understood that network addresses of different services on different nodes are different. If the network addresses of the same service on different nodes have a same address type, the network addresses of the same service on different nodes are the same. For example, based on Table 2, it can be learned that both the node L2ID&1 and the node L2ID&3 provide the service AID 1, and the address types of the network addresses corresponding to the two nodes are the same. Therefore, "Address 11" and "Address 13" are also the same.

**Table 2**

| Identity of a node | Identifier of a service | Address type of a network address (0: communication domain address; 1: IP address) | Network address of the service |
|---|---|---|---|
| L2ID&1 | AID1 | 0 | Address 11 |
| L2ID&1 | AID2 | 1 | Address 12 |
| L2ID&3 | AID1 | 0 | Address 13 |
| ... | | ... | ... |

It may be understood that Table 2 is merely used as an example to reflect the correspondence among the identity of the node, the identifier of the service on the node, the network address of the service, and the address type of the network address. In actual application, text content and a storage manner of the correspondence may alternatively be in another form. This is not specifically limited herein.

It may be understood that Table 2 and Table 1 may be separately represented and stored as described above. In some possible embodiments, Table 1 and Table 2 may alternatively be combined into one table for representation and storage. In this case, the identifier of the service in the mapping relationship that records allocation of a network address of an address type to a node may be default. This is not specifically limited herein.

A process in which the second node allocates the first network address to the first service by searching for the second mapping information is specifically described based on Table 2: If the identity of the first node is "L2ID&1", the identifier of the first service is "AID2", and the value of the first type identifier is "1" (equivalent to that the first address type is "IP address"), and if it is found in Table 2 that the mapping relationship "L2ID&1-AID2-1-address 12" exists, the address 12 is used as the first network address allocated to the first service on the first node.

In this embodiment of this application, when the second mapping information does not include the second mapping relationship, it indicates that the first network address of the first address type has not been historically allocated to the first service on the first node. In this case, for a specific allocation manner of the first network address, refer to the following manner B1 and manner B2:

### Manner B1: The second node is a management node in the first communication domain.

When the second node is the management node in the first communication domain, the second node allocates the first network address to the first service based on the first address type and the identifier of the first service. The first address type may be a communication domain address or an IP address.

In some possible embodiments, when the second node is the management node in the first communication domain and the first address type is the IP address, the second node may send a third message to the DHCP server, where the third message includes the first type identifier, the identity of the first node, and the identifier of the first service on the first node; and receive an eighth message sent by the DHCP server, where the eighth message includes the first network address allocated to the first service. In this case, the first network address is allocated by the DHCP server to the first service on the first node based on the third message. That is, when the second node is the management node in the first communication domain and the first address type is the IP address, if the second node does not have the DHCP function, the second node may request, via the third message, the DHCP server to allocate, to the first service, the first network address whose first address type is the IP address.

It can be learned that when the second node is the management node in the first communication domain:
(1) when the first address type is the communication domain address, the first network address of the first service is allocated by the second node; or
(2) when the first address type is the IP address, the first network address of the first service is allocated by the second node, or is allocated by the DHCP server by using the second node.

### Manner B2: The second node is not a management node in the first communication domain.

In an implementation, when the second node is not the management node in the first communication domain, the second node sends a third message to a third node, where the third message includes the first type identifier, the identity of the first node, and the identifier of the first service on the first node, and the third node is the management node in the first communication domain; and receives a ninth message sent by the third node, where the ninth message includes the first network address allocated to the first service. In this case, the first network address is allocated by the management node to the first service on the first node based on the third message.

In another implementation, the first communication domain includes a plurality of management nodes, and the second node is not the management node in the first communication domain. The second node sends the third message to the plurality of management nodes in the first communication domain, where the third message includes the first type identifier, the identity of the first node, and the identifier of the first service on the first node; receives tenth messages sent by the plurality of management nodes, where the tenth message corresponding to the management node includes a network address allocated by the management node to the first service based on the third message; selects a target management node from the plurality of management nodes; and obtains the first network address based on a tenth message sent by the target management node.

For example, the target management node selected by the second node meets at least one of the following conditions:
(1) a management node whose priority exceeds a preset level;
(2) a management node corresponding to a tenth message first received by the second node; or
(3) a management node whose signal strength exceeds a preset threshold.

For example, the target management node may be a management node having a highest priority, or may be a management node corresponding to a maximum signal strength. This is not specifically limited herein.

In the foregoing two implementations, the type of the first network address may be the communication domain address, or may be the IP address. This is not specifically limited herein.

In some possible embodiments, when there are a plurality of management nodes in the first communication domain, after the second node selects the target management node, the second node may further broadcast a response message, where the response message indicates that the second node has selected a network address provided by the target management node for the first service. In this way, the target management node that receives the response message may store the mapping relationship among the identifier of the first service, the network address allocated to the first service, the first address type, and the identity of the first node, and another management node that receives the response message may learn that the network address provided by the another management node is not selected. In this way, the provided network address may be reclaimed, to avoid an address waste.

It can be learned that when the second node is not the management node in the first communication domain:
(1) when there is only one management node in the first communication domain, the second node sends a third message to the management node, and in this case, the first network address is allocated by the management node to the first service on the first node by using the second node; and
(2) when the first communication domain includes a plurality of management nodes, the second node may broadcast the third message to the plurality of management nodes, and select, from network addresses provided by the plurality of management nodes, a network address provided by one management node as the first network address allocated to the first service.

In an implementation, the third message includes all information related to allocation of the first network address in the first message.

For example, if the first message received by the second node includes the first type identifier, the identity of the first node, and the identifier of the first service on the first node, the third message sent by the second node also includes the first type identifier, the identity of the first node, and the identifier of the first service on the first node.

Further, the first message received by the second node further includes other information related to allocation of the first network address, for example, one or more of unicast address identification information, multicast address identification information, anycast address identification information, or quantity identification information. In this case, the third message further includes the same other information related to allocation of the first network address. For specific descriptions of the unicast address identification information, the multicast address identification information, the anycast address identification information, and the quantity identification information, refer to the following descriptions of corresponding information. This is not specifically limited herein.

It may be understood that, in the foregoing embodiment, the second node sends the third message to the DHCP server or the management node in the first communication domain, and the second node may be considered as a forwarding node. However, the second node does not directly forward or transparently transmit the first message, but sends information that is related to allocation of the first network address and that is in the first message by sending the third message.

In some possible embodiments, if the second mapping information does not include the second mapping relationship, when the second node obtains the first network address allocated to the first service on the first node, the second node may further add the mapping relationship among the identity of the first node, the identifier of the first service, the first address type, and the first network address to the second mapping information. For example, it is assumed that the identity of the first node is "L2ID&1", the identifier of the first service is "AID3", and the first address type is "IP address". After querying Table 2 based on the identity of the first node, the identifier of the first service, and the first address type, the second node determines that the second mapping relationship does not exist in Table 2. In this case, the second node obtains, in the foregoing manner B1 or manner B2, the first network address (assumed to be the "Address 14") allocated to the first service, and the second node may add this mapping relationship "L2ID&1-AID3-1-address 14" to the foregoing Table 2.

In some possible embodiments, the first message further includes at least one of the following information:
unicast address identification information, indicating that the first network address is a unicast address;
multicast address identification information, indicating that the first network address is a multicast address;
anycast address identification information, indicating that the first network address is an anycast address; or
quantity identification information, indicating a quantity of applied first network addresses.

If the first network address is allocated to the first node, the first network address may be a unicast address or a multicast address. If the first network address is allocated to the first service on the first node, the first network address may be a unicast address, a multicast address, or an anycast address (anycast address).

In a specific implementation, the quantity identification information is optional information in the first message. For example, the quantity identification information may correspond to a quantity of identifiers of the first services in the first message. Specifically, a quantity of applied first network addresses is the same as the quantity of the identifiers of the first services. For example, the identifier of the first service included in the first message includes: an AID1, an AID2, and an AID3. This means that the first message is used to apply for allocating one first network address to each of the three services: AID1, AID2, and AID3, that is, a quantity of identifiers of the first services in the first message is 3. In this case, an applied quantity that is of the first network addresses and that is indicated by the quantity identification information is also 3. Corresponding network addresses may be allocated to a plurality of services on the first node via the quantity identification information. For another example, if the first network address is allocated to the first node, the quantity identification information indicates that the quantity of applied first network addresses is 1.

In some possible embodiments, when there are a plurality of identifiers of the first services in the first message, each identifier of the first service may have corresponding unicast address identification information, multicast address identification information, or anycast address identification information. In some possible embodiments, when the first network addresses corresponding to the plurality of identifiers of the first services are all used for unicast, multicast, or anycast, the first network addresses may alternatively be represented by using one flag bit. This is not specifically limited herein.

In a specific implementation, the unicast address identification information is optional information in the first message. The unicast address identification information may be represented by using a field, a flag bit, or a bit. The flag bit is used as an example. When a corresponding flag bit is set, it indicates that the first network address is a unicast address. The second node may learn, via the unicast address identification information, that the first network address requested by the first node to allocate to the first node or the first service on the first node is used for unicast.

In a specific implementation, the multicast address identification information is optional information in the first message. The multicast address identification information may be represented by using a field, a flag bit, or a bit. The second node may learn, via the multicast address identification information, that the first network address requested by the first node to allocate to the first node or the first service on the first node is used for multicast.

It can be learned that the unicast address identification information and the multicast address identification information may be separately represented as described above. In this case, if the first message includes the unicast address identification information and the multicast address identification information, and the first network address is used for unicast, only a corresponding setting operation needs to be performed on the unicast address identification information.

In some possible embodiments, the unicast address identification information and the multicast address identification information may alternatively be represented by using one flag bit. For example, when the flag bit is a first value, it indicates that the first network address is used for unicast; or when the flag bit is a second value, it indicates that the first network address is used for multicast.

In a specific implementation, the anycast address identification information is optional information in the first message. The second node may learn, via the anycast address identification information, that the first network address requested by the first node to allocate to the first service on the first node is used for anycast. The multicast address identification information may be represented by using a field, a flag bit, or a bit. In some possible embodiments, the unicast address identification information, the multicast address identification information, and the anycast address identification information may alternatively be represented by using a field, a flag bit, or the like. Details are not described herein again.

The at least one of the unicast address identification information, the multicast address identification information, the anycast address identification information, or the quantity identification information may specifically include the following cases.

### (1) Unicast address identification information

For example, the first message includes the first address type, the identity of the first node, and the unicast address identification information, and indicates that the first network address of the first address type is requested to be allocated to the first node and the first network address is used for unicast.

### (2) Multicast address identification information

For example, the first message includes the first address type, the identity of the first node, and the multicast address identification information, and indicates that the first network address of the first address type is requested to be allocated to the first node and the first network address is used for multicast.

### (3) Anycast address identification information

For example, the first message includes the first address type, the identity of the first node, the identifier of the first service, and the anycast address identification information, and indicates that the first network address of the first address type is requested to be allocated to the first service on the first node and the first network address is used for anycast.

### (4) Quantity identification information

For example, the first message includes the first address type, the identity of the first node, and the quantity identification information (which indicates that the quantity of applied first network addresses is 1). In this case, that the first network address is used for unicast or multicast may be defaulted by a system.

For another example, the first message includes the identifier of the first service, the identity of the first node, the first address type, and the quantity identification information, where the identifier of the first service includes an AID1 and an AID2, and the quantity identification information indicates that the quantity of applied first network addresses is 2. The first message indicates that the first network address of the first address type is requested to be allocated to each of the services AID1 and AID2. In this case, that the first network address is used for unicast, multicast, or anycast may be defaulted by a system.

### (5) Unicast address identification information and multicast address identification information

For example, it is assumed that the first message requests to allocate the first network address of the first address type to the first node, and the first network address is used for unicast. If the first message includes unicast address identification information and multicast address identification information, the unicast address identification information and the multicast address identification information may be separately represented by using a flag bit, where a flag bit corresponding to the unicast address identification information is set, but a flag bit corresponding to the multicast address identification information is not set.

For another example, it is assumed that the first message requests to allocate the first network address of the first address type to each of the services AID1 and AID2, and the first message further includes the unicast address identification information and the multicast address identification information. In this case, if the unicast address identification information corresponds to the AID1, the first message indicates that the first network address allocated to the AID1 is used for unicast; or if the multicast address identification information corresponds to the AID2, the first message indicates that the first network address allocated to the AID2 is used for multicast.
(6) Unicast address identification information and anycast address identification information. For details, refer to the example shown in the case (5).
(7) Multicast address identification information and anycast address identification information. For details, refer to the example shown in the case (5).
(8) Unicast address identification information and quantity identification information

For example, it is assumed that the first message requests to allocate the first network address of the first address type to the first node. If the first message includes the unicast address identification information and the quantity identification information, the first network address is used for unicast, and the quantity identification information indicates that the quantity of applied first network addresses is 1.

For another example, it is assumed that the first message requests to allocate the first network address of the first address type to each of the services AID1 and AID2. If the first message includes the unicast address identification information and the quantity identification information, both the first network addresses are used for unicast, and the quantity identification information indicates that the quantity of applied first network addresses is 2.
(9) Multicast address identification information and quantity identification information. For details, refer to the example shown in the case (8).
(10) Anycast address identification information and quantity identification information. For details, refer to the example shown in the case (8).
(11) Unicast address identification information, multicast address identification information, and anycast address identification information. In this case, the unicast address identification information, the multicast address identification information, and the anycast address identification information may be separately represented by using a flag bit (or a field or a bit). Whether a corresponding flag bit (or a field or a bit) is set is determined based on an actual application.
(12) Unicast address identification information, multicast address identification information, and quantity identification information

For example, it is assumed that the first message requests to allocate the first network address of the first address type to the first node, and the first message includes the unicast address identification information, the multicast address identification information, and the quantity identification information. In this case, the unicast address identification information and the multicast address identification information may be separately represented by using a flag bit. It is assumed that a flag bit corresponding to the unicast address identification information is not set, but a flag bit corresponding to the multicast address identification information is set, and the quantity identification information indicates that the quantity of applied first network addresses is 1. It can be learned that the first network address is used for multicast.

For another example, it is assumed that the first message requests to allocate the first network address of the first address type to each of the services AID1 and AID2, and the first message includes the unicast address identification information, the multicast address identification information, and the quantity identification information. In this case, if the unicast address identification information corresponds to the AID1, the first message indicates that the first network address allocated to the AID1 is used for unicast; or if the multicast address identification information corresponds to the AID2, the first message indicates that the first network address allocated to the AID2 is used for multicast. Therefore, the quantity identification information indicates that the quantity of applied first network addresses is 2.
(13) Unicast address identification information, anycast address identification information, and quantity identification information. For details, refer to the example shown in the case (12).
(14) Multicast address identification information, anycast address identification information, and quantity identification information. For details, refer to the example shown in the case (12).
(15) Unicast address identification information, multicast address identification information, anycast address identification information, and quantity identification information. In this case, the unicast address identification information, the multicast address identification information, and the anycast address identification information may be separately represented by using a flag bit (or a field or a bit). Whether a corresponding flag bit (or a field or a bit) is set is determined based on an actual situation.

In some possible embodiments, a network address historically allocated to a node may not be permanently stored in the first mapping information maintained by the second node, and a network address historically allocated to a service on the node may not be permanently stored in the second mapping information. For example, if the second node detects that duration in which a node does not use the network address reaches a preset threshold, the second node may delete the network address corresponding to the node from the first mapping information. If the second node detects that duration in which the network address is not used by a service reaches a preset threshold, the second node may delete the network address corresponding to the service from the second mapping information. For another example, the second node receives an address release request sent by a node. In this case, in response to the address release request, the second node may delete a network address corresponding to the node from the first mapping information.

S103: The second node sends a second message to the first node, where the second message includes the first network address.

Correspondingly, the first node receives the second message sent by the second node.

In this embodiment of this application, the first network address may be allocated to the first node, or may be allocated to the first service on the first node.

Specifically, when the first message received by the second node includes an identifier of a service on the first node, the first network address is allocated to the first service on the first node; or when the first message received by the second node does not include an identifier of any service, the first network address is allocated to the first node.

S104: The first node obtains the first network address based on the second message.

In this embodiment of this application, the first network address is allocated to the first node or the first service on the first node.

A type of the first network address is the first address type, and the first address type is a communication domain address or an IP address.

For example, when the first address type is the IP address, the first network address may be an IPv4 address or an IPv6 address. In some possible embodiments, when the first address type is the IP address, the first network address may alternatively be a local IPv6 address allocated to the first node. In this case, the first network address includes an IPv6 prefix of the first communication domain and a second network address, the second network address is a network address that is used by the first node in the first communication domain and whose address type is the communication domain address.

In some possible embodiments, the first node may further change an address type. Specifically, the first node sends an eleventh message to the second node, where the eleventh message includes a second type identifier, the second type identifier indicates a second address type, and the second address type is different from the first address type; receives a twelfth message sent by the second node, where the twelfth message includes a third network address allocated to the first node or the first service on the first node, and an address type of the third network address is the second address type; and obtains the third network address based on the twelfth message.

Further optionally, before proposing to change the address type, the first node may first request the second node to release the first network address that is of the first address type and that has been historically applied for for the first node or the first service on the first node. In some possible embodiments, the first node may alternatively not perform an action of requesting address release. This is not specifically limited herein.

For example, it is assumed that the first network address of the first address type has been historically applied for for the first node. Before changing the address type, the first node may send a release request instruction to the second node, so that the second node deletes the mapping relationship among the identity of the first node, the first address type, and the first network address from the first mapping information.

For another example, it is assumed that the first network address of the first address type has been historically applied for for the first service on the first node. Before changing the address type, the first node may send a release request instruction to the second node, so that the second node deletes the mapping relationship among the identity of the first node, the identifier of the first service, the first address type, and the first network address from the second mapping information.

It can be learned that, according to this embodiment of this application, the first node that newly goes online in a network may uniquely determine an accessed second node that has an address allocation service function, and the first node obtains an allocated network address only from the second node. An interaction process of address allocation is simple, helping improve network address allocation efficiency. In addition, the mapping information locally maintained by the second node can ensure that the network address allocated to the first node or the service on the first node is not repeated. In addition, the first node may further indicate an address type of a network address expected to be allocated, for example, the communication domain address or the IP address, so that the first node can flexibly obtain different types of network addresses. In addition, a local IPv6 address may be further allocated to the first node, so as to support the first node in accessing the network by using a multi-hop radio link.

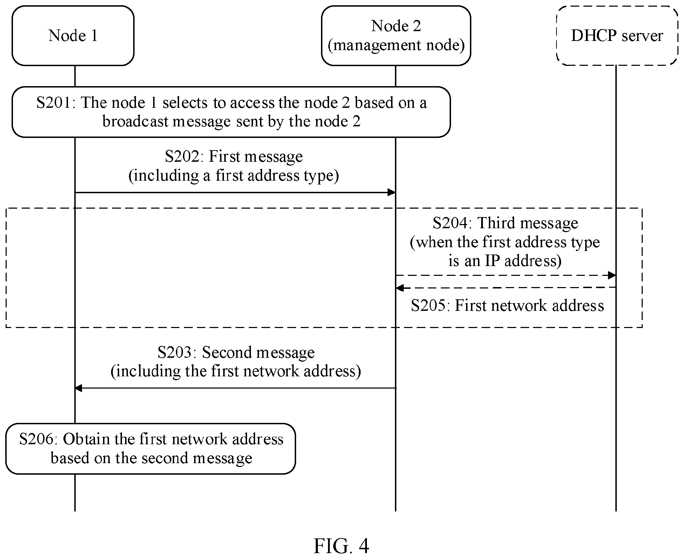

FIG. 4 is a flowchart of another address allocation method according to an embodiment of this application. The method is applied to a communication system. The communication system includes at least a node 1 and a node 2. The node 1 is a node that applies for an address, and the node 2 is a management node. The method includes but is not limited to the following steps.

S201: The node 1 selects to access the node 2 based on a broadcast message sent by the node 2.

The broadcast message sent by the node 2 includes a service identifier, and the service identifier indicates that the node 2 provides an address allocation service, that is, the node 2 has an address allocation function.

In some possible embodiments, the node 2 may alternatively be determined by the node 1 from at least one node that sends the broadcast message. In an implementation, the node 2 may be determined by the node 1 from the at least one node based on at least one of priority information of the node, a detected signal strength, or a receiving moment of the broadcast message. For example, the node 2 may be a node corresponding to a broadcast message first received by the node 1, or may be a node corresponding to a maximum signal strength detected by the node 1, or may be a node having a highest priority. This is not specifically limited herein.

For example, that the node 1 selects to access the node 2 may be: The node 1 establishes a default bearer with the node 2 to activate a common management transport channel, so that the node 1 may exchange address application signaling with the node 2 through the common management transport channel, for example, a first message described below. The common management transport channel is a communication channel.

In this embodiment of this application, the node 2 is a management node in a communication domain, and the node 2 is also an access point of the node 1.

For example, the node 1 may be any node T in the nodes T1, T2, ..., and Tn in (a) in FIG. 1, and the node 2 is the node G in (a) in FIG. 1.

For example, the node 1 may be the node G2 or G3 in (b) in FIG. 1, and the node 2 is the node G1 in (b) in FIG. 1.

For example, the node 1 may be the node G2 or G3 in (c) in FIG. 1, and the node 2 is the node G1 in (c) in FIG. 1.

S202: The node 1 sends a first message to the node 2.

In an implementation, the first message includes an identity of the node 1 and a first type identifier, and the first type identifier indicates a first address type. In this case, if the first message does not include an identifier of any service, it indicates that the first message is used to request to allocate a first network address to the node 1.

The first address type is a communication domain address or an IP address.

The identity of the node 1 identifies the node 1. For example, the identity of the node 1 may be an L2ID of the node 1.

In another implementation, the first message further includes an identifier of a first service on the node 1. In this case, it indicates that the first message is used to request to allocate the first network address to the first service.

S203: The node 2 sends a second message to the node 1.

In this embodiment of this application, before the node 2 sends the second message to the node 1, the node 2 needs to first obtain the first network address based on the first address type. For a specific process, refer to C11 to C13.

C11: Determine whether the first message includes the identifier of the first service.

If the first message does not include the identifier of the first service, it is determined that the first network address is allocated to the node 1, and C12 is performed; or if the first message includes the identifier of the first service, it is determined that the first network address is allocated to the first service on the node 1, and C13 is performed.

C12: Obtain, based on the first address type and the identity of the node 1, the first network address allocated to the node 1.

In a specific implementation, the first network address allocated to the node 1 is obtained based on a first mapping relationship, where the first mapping relationship represents a mapping relationship among the identity of the node 1, the first network address, and the first address type, the first mapping relationship belongs to a set 1 including a mapping relationship among an identity of a node to which the network address is allocated, a network address of the node, and an address type of the network address of the node. It may be understood that the set 1 is the first mapping information in the embodiment in FIG. 3.

In another specific implementation, the node 2 allocates the first network address to the node 1 based on the first address type and the identity of the node 1. In other words, when no network address of the first address type has been historically allocated to the node 1, the node 2 allocates the first network address to the node 1. In addition, the node 2 may further add, to the set 1, the first network address that is of the first address type and that is allocated to the node 1.

The first address type may be a communication domain address or an IP address.

In this case, the second message sent by the node 2 to the node 1 includes the first network address, where the first network address is allocated to the node 1.

C13: Obtain, based on the first address type and the identifier of the first service, the first network address allocated to the first service.

In a specific implementation, the first network address allocated to the first service is obtained based on a second mapping relationship, where the second mapping relationship represents a mapping relationship among the identity of the node 1, the identifier of the first service, the first network address, and the first address type, and the second mapping relationship belongs to a set 2 including a mapping relationship among an identifier of a service to which a network address is allocated, the network address of the service, an address type of the network address, and an identity of a node on which the service is located. It may be understood that the set 2 is the second mapping information in the embodiment in FIG. 3.

In another specific implementation, the node 2 allocates the first network address to the first service based on the first address type and the identifier of the first service. In other words, when no network address of the first address type has been historically allocated to the first service on the node 1, the node 2 allocates the first network address to the first service. In addition, the node 2 may further add, to the set 2, the first network address that is of the first address type and that is allocated to the first service on the node 1.

The first address type may be a communication domain address or an IP address.

In this case, the second message sent by the node 2 to the node 1 includes the first network address, where the first network address is allocated to the first service on the node 1.

Optionally, in some possible embodiments, when the first address type is the IP address, and the node 2 does not have a DHCP function, before sending the second message to the node 1, the node 2 may further obtain the first network address by using S204 and S205.

S204: The node 2 sends a third message to a DHCP server.

In an implementation, the third message includes the first type identifier and the identity of the node 1, so as to request the DHCP server to allocate the first network address to the node 1. In this case, for details of the third message, refer to related descriptions of the third message in the embodiment of "First case: The first network address is allocated to the first node" in S102 in FIG. 3. Details are not described herein again.

In another implementation, the third message includes the first type identifier, the identity of the node 1, and the identifier of the first service on the node 1, so as to request the DHCP server to allocate the first network address to the first service on the node 1. In this case, for details of the third message, refer to related descriptions of the third message in the embodiment "Second case: The first network address is allocated to the service on the first node" in S102 in FIG. 3. Details are not described herein again.

A type of the first network address is the IP address.

S205: The DHCP server sends the first network address to the node 2.

In an implementation, when the first message does not include the identifier of the first service, the DHCP server allocates the first network address to the node 1 based on the first address type and the identity of the node 1.

In another implementation, when the first message includes the identifier of the first service, the DHCP server allocates the first network address to the first service on the node 1 based on the first address type and the identifier of the first service.

After obtaining the first network address in the foregoing implementation, the DHCP server may send a message carrying the first network address to the node 2.

In addition, the DHCP server may further add related information of a newly allocated first network address to local address management information, for example, a mapping relationship among the identity of the node 1, the first address type, and the first network address of the node 1, or a mapping relationship among the identifier of the first service, the first network address of the first service, the first address type, and the identity of the node 1. This is not specifically limited herein.

In some possible embodiments, the node 2 may further send the third message in S204 to a plurality of DHCP servers; receive address allocation feedback messages sent by the plurality of DHCP servers, where the address allocation feedback message corresponding to the DHCP server includes the first network address allocated by the DHCP server based on the third message; select a target DHCP server from the plurality of DHCP servers; and obtain the first network address based on an address allocation feedback message sent by the target DHCP server. In addition, after the node 2 obtains the first network address, the node 2 may further broadcast a message 1, where the message 1 indicates that the node 2 has selected the network address provided by the target DHCP server. In this way, the target DHCP server that receives the message 1 may send an acknowledgment message to the node 2 to indicate that the first network address selected by the node 2 is available, and another unselected DHCP server that receives the message 1 may learn that a network address provided by the DHCP server is not selected by the node 2. In this way, the provided network address may be reclaimed, to avoid an address waste.

In this case, compared with that in a conventional DHCP address allocation manner, client's work of performing address selection and receiving the acknowledgment message from the DHCP server is offloaded to the node 2. In this way, load of the node 1 can be reduced, a protocol stack on the node 1 is lightweight, and power consumption of the node 1 is reduced.

The target DHCP server may be a DHCP server corresponding to a maximum signal strength, or may be a DHCP server corresponding to an address allocation feedback message first received by the node 2, or may be a DHCP server corresponding to a highest priority, or may be determined by the node 2 based on a plurality of factors in a detected signal strength, priority information of the DHCP server, and a receiving moment corresponding to an address allocation feedback message. This is not specifically limited herein.

S206: The node 1 obtains the first network address based on the second message.

After obtaining the first network address, the node 1 may perform local configuration based on the first network address.

It can be learned that, in this embodiment of this application, the node 1 that applies for the address may determine to discover and access the node 2 that has an address allocation service, and receive only the allocated first network address from the node 2. This helps improve network address allocation efficiency, and may implement network address allocation in a star single-hop topology scenario. In addition, the node 1 may further select to apply for an expected address type and apply for a network address for a specific object (for example, a node or a service on a node). This enriches application scenarios of address allocation.

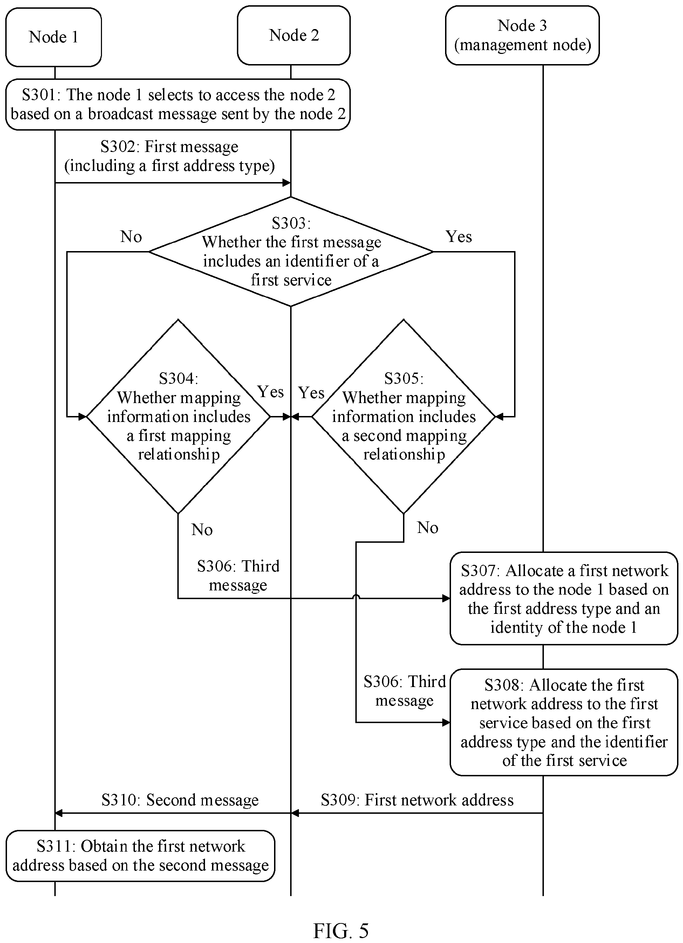

FIG. 5 is a flowchart of another address allocation method according to an embodiment of this application. The method is applied to a communication system. The communication system includes at least a node 1, a node 2, and a node 3. The node 1 is a node that applies for an address, the node 2 is an access point of the node 1, and the node 3 is a management node. The method includes but is not limited to the following steps.

S301: The node 1 selects to access the node 2 based on a broadcast message sent by the node 2.

For a specific process in which the node 1 accesses the node 2, refer to related descriptions of S201 in the embodiment in FIG. 4. Details are not described herein again.

In this embodiment of this application, the node 3 is a management node in a first communication domain, and the node 1, the node 2, and the node 3 all belong to the first communication domain.

For example, with reference to (b) in FIG. 1, the node 3 may be the node G1, and the node 1 and the node 2 meet any one of the following cases:
(1) the node 1 is the node T1 or G4, and the node 2 is the node G2;
(2) the node 1 is the node T2, and the node 2 is the node G4; and
(3) the node 1 is the node G4 or T3, and the node 2 is the node G3.

For example, with reference to (c) in FIG. 1, the node 3 may be the node G1, and the node 1 and the node 2 meet any one of the following cases:
(1) the node 1 is the node T1 or T2, and the node 2 is the node G2; or
(2) the first node is the node T3 or T4, and the second node is the node G3.

S302: The node 1 sends a first message to the node 2. For details of this step, refer to related descriptions of S202 in the embodiment in FIG. 4. Details are not described herein again.

S303: The node 2 determines whether the first message includes an identifier of a first service.

If the first message does not include the identifier of the first service, it indicates that the first message is used to request to allocate the first network address to the node 1, and S304 is performed.

When the first message includes the identifier of the first service, it indicates that the first message is used to request to allocate the first network address to the first service on the node 1, and S305 is performed.

S304: The node 2 determines whether mapping information includes a first mapping relationship.

The first mapping relationship represents a mapping relationship among an identity of the node 1, the first network address, and a first address type.

In this case, the mapping information is a set including a mapping relationship among an identity of a node to which a network address is allocated, the network address of the node, and an address type of the network address of the node. In this case, the mapping information is the first mapping information in the embodiment in FIG. 3 or the set 1 in the embodiment in FIG. 4.

When the mapping information includes the first mapping relationship, the first network address allocated to the node 1 may be obtained based on the first mapping relationship.

When the mapping information does not include the first mapping relationship, S306 is performed, so that the node 3 performs S307.

S305: The node 2 determines whether the mapping information includes a second mapping relationship.

The second mapping relationship represents a mapping relationship among the identity of the node 1, the identifier of the first service, the first network address, and the first address type. In this case, the mapping information is a set including a mapping relationship among an identifier of a service to which a network address is allocated, the network address of the service, a type identifier of the network address, and an identity of a node on which the service is located. In this case, the mapping information is the second mapping information in the embodiment in FIG. 3 or the set 2 in the embodiment in FIG. 4.

When the mapping information includes the second mapping relationship, the first network address allocated to the first service may be obtained based on the second mapping relationship.

When the mapping information does not include the second mapping relationship, S306 is performed, so that the node 3 performs S308.

S306: The node 2 sends a third message to the node 3.

Correspondingly, the node 3 receives the third message sent by the node 2.

In a specific implementation, corresponding to S304, the third message includes a first type identifier and the identity of the node 1, the first type identifier indicates the first address type, and the first message does not include an identifier of any service. In this case, for details of the third message, refer to related descriptions of the third message in the embodiment of "First case: The first network address is allocated to the first node" in S102 in FIG. 3. Details are not described herein again.

In another specific implementation, corresponding to S305, the third message includes a first type identifier, the identity of the node 1, and the identifier of the first service on the node 1. In this case, for details of the third message, refer to related descriptions of the third message in the embodiment "Second case: The first network address is allocated to the service on the first node" in S102 in FIG. 3. Details are not described herein again.

In some possible embodiments, there may be at least one aggregation node between the node 2 and the node 3. In this case, the node 2 may further send, to the node 3 via the at least one aggregation node, all information related to allocation of the first network address in the first message.

In some possible embodiments, that the node 3 includes a plurality of nodes means that there are a plurality of management nodes in the first communication domain. In this case, that the node 2 sends a third message to the node 3 includes: The node 1 broadcasts the third message to the node 3.

S307: The node 3 allocates the first network address to the node 1 based on the first address type and the identity of the node 1.

In some possible embodiments, after the node 3 allocates the first network address to the node 1, the node 3 may further store a mapping relationship among the identity of the node 1, the first address type, and the first network address, to ensure that the allocated network address is not repeated.

S308: The node 3 allocates the first network address to the first service based on the first address type and the identifier of the first service.

In some possible embodiments, after the node 3 allocates the first network address to the first service on the node 1, the node 3 may further store a mapping relationship among the identifier of the first service, the first network address, the first address type, and the identity of the node 1, to ensure that the allocated network address is not repeated.

S309: The node 3 sends the first network address to the node 2.

The first network address may be carried in a message, for example, an address allocation feedback message.

Correspondingly, the node 2 obtains the first network address from the node 3. That is, when the node 2 does not find the first mapping relationship or the second mapping relationship in locally stored mapping information, the node 2 may obtain the allocated first network address from the node 3.

In some possible embodiments, when the node 3 includes a plurality of nodes, before the node 2 obtains the first network address from the node 3, the node 2 may select one target management node from the plurality of nodes according to a preset rule, and obtain a first network address provided by the target management node. In addition, after the node 2 obtains the first network address, the node 2 may further broadcast a message 2, where the message 2 indicates that the node 2 has selected the first network address provided by the target management node. In this way, the target management node that receives the message 2 may further send an acknowledgment message to the node 2 to indicate that the first network address selected by the node 2 is available, and another unselected management node that receives the message 2 may learn that a network address provided by the management node is not selected by the node 2. In this way, the provided network address may be reclaimed, to avoid an address waste.

The preset rule includes but is not limited to a priority exceeding a preset level, a signal strength exceeding a preset threshold, a node corresponding to an address allocation feedback message that is first received, and the like. For this embodiment, refer to related descriptions of selecting the target management node in the embodiment in FIG. 3. Details are not described herein again.

In some possible embodiments, when there is at least one aggregation node between the node 3 and the node 2, that the node 3 sends the first network address to the node 2 may be: The node 3 sends the first network address to the node 2 via the at least one aggregation node.

S310: The node 2 sends a second message to the node 1.

In a specific implementation, the second message includes the first network address, and the first network address is allocated to the node 1.

In another specific implementation, the second message includes the first network address, and the first network address is allocated to the first service on the node 1.

It may be understood that, based on S304 to S309, it can be learned that the first network address may be obtained by the node 2 from local mapping information, or the first network address may be obtained by the node 2 from the node 3. This is not specifically limited herein.

S311: The node 1 obtains the first network address based on the second message.

It can be learned that, in this embodiment of this application, the node 1 that applies for the address may determine to discover and access the node 2 that has an address allocation service, and receive only the allocated first network address from the node 2. This helps improve network address allocation efficiency, and may implement network address allocation in a tree-like multi-hop topology scenario. In addition, the node 1 may further apply for an expected address type and apply for a network address for a specific object (for example, a node or a service on a node). This enriches application scenarios of address allocation.

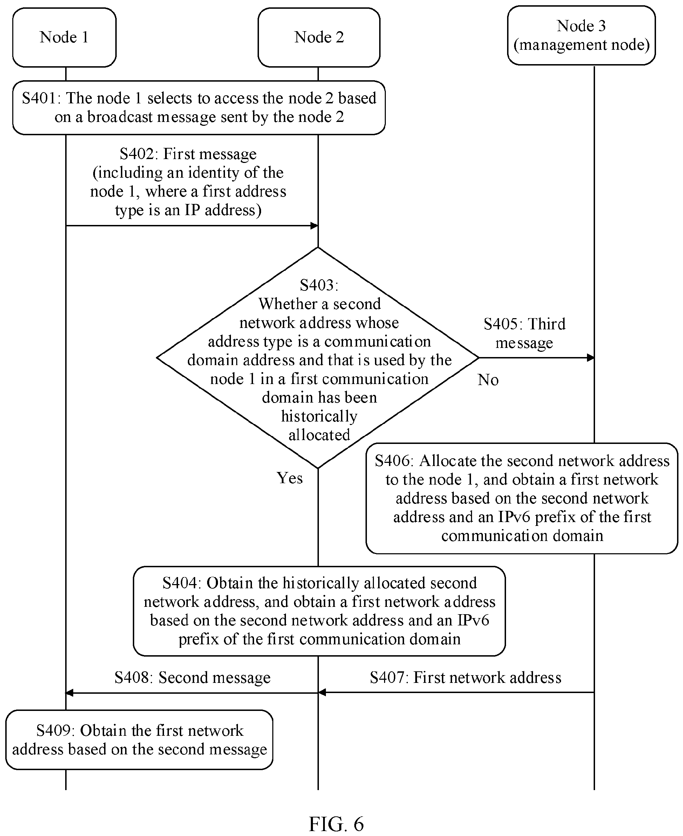

FIG. 6 is a flowchart of another address allocation method according to an embodiment of this application. The method is applied to a communication system. The communication system includes at least a node 1, a node 2, and a node 3. The node 1 is a node that applies for an address, the node 2 is an access point of the node 1, and the node 3 is a management node. A difference from the embodiment in FIG. 5 lies in that FIG. 6 provides a method for allocating a local IPv6 address to a node when a first address type is an IP address. The method includes but is not limited to the following steps.

S401: A node 1 selects to access a node 2 based on a broadcast message sent by the node 2. For details of this step, refer to related descriptions of S301 in the embodiment in FIG. 5. Details are not described herein again.

S402: The node 1 sends a first message to the node 2.

The first message includes an identity of the node 1 and a first type identifier, where the first type identifier indicates a first address type, and the identity of the node 1 identifies the node 1.

In this embodiment of this application, the first address type is the IP address.

S403: The node 2 determines whether a second network address whose address type is a communication domain address and that is used by the node 1 in a first communication domain has been historically allocated.

Specifically, when determining that the second network address has been historically allocated, the node 2 performs S404 and S408; or when determining that the second network address has not been historically allocated, the node 2 sequentially performs S405 to S408.

For example, the node 2 may determine, based on locally maintained address allocation information (for example, the first mapping information in the embodiment in FIG. 3), whether the second network address whose address type is the communication domain address and that is used by the node 1 in the first communication domain has been historically allocated. Specifically, when the node 2 finds, in mapping information, a network address corresponding to the identity of the node 1 and the address type of the network address is the communication domain address, it indicates that the second network address has been historically allocated; or when the node 2 does not find, in the mapping information, the network address corresponding to the identity of the node 1, or the node 2 finds, in the mapping information, the network address corresponding to the identity of the node 1 but the address type of the network address is not the communication domain address, it indicates that the second network address has not been historically allocated.

S404: The node 2 obtains the historically allocated second network address, and obtains a first network address based on the second network address and an IPv6 prefix of the first communication domain.

That is, when the second network address has been historically allocated, the first network address may be directly allocated by the node 2.

A type of the second network address is the communication domain address. The second network address may be obtained by the node 2 from the mapping information. The second network address is a network address corresponding to a mapping relationship between the identity of the node 1 and a communication domain address type in the mapping information.

In an implementation, a length of the second network address may be 8 bits, 16 bits, 24 bits, or another quantity of bits. This is not specifically limited herein.

In a specific implementation, obtaining the first network address based on the second network address and the IPv6 prefix of the first communication domain includes: embedding the second network address behind the IPv6 prefix of the first communication domain, to generate the first network address.

In this way, the second network address that has been historically allocated to the node 1 and whose type is the communication domain address is used as an interface identifier of the node 1, where the interface identifier is used to construct a local IPv6 address of the node 1, so that consumption of a quantity of addresses may be reduced, and it may be determined that the first network address allocated to the node 1 is not repeated.

S405: The node 2 sends a third message to the node 3.

If the second network address has not been historically allocated, the node 2 sends the third message to the node 3, to request the node 3 to allocate the first network address to the node 1 based on the third message, where the third message includes the first type identifier and the identity of the node 1. For details of the third message, refer to related descriptions of the third message in the embodiment of "First case: The first network address is allocated to the first node" in S102 in FIG. 3. Details are not described herein again.

Correspondingly, the node 3 receives the third message sent by the node 2.

In some possible embodiments, when there is at least one aggregation node between the node 2 and the node 3, the node 2 may further send, to the node 3 via the at least one aggregation node, all information related to allocation of the first network address in the first message.

S406: The node 3 allocates the second network address to the node 1, and obtains a first network address based on the second network address and the IPv6 prefix of the first communication domain.

S407: The node 3 sends the first network address to the node 2.

The first network address may be carried in a message.

Correspondingly, the node 2 obtains the first network address from the node 3.

In some possible embodiments, when there is at least one aggregation node between the node 3 and the node 2, that the node 3 sends the first network address to the node 2 may be: The node 3 sends the first network address to the node 2 via the at least one aggregation node.

S408: The node 2 sends a second message to the node 1.

Correspondingly, the node 1 receives the second message sent by the node 2.

The second message includes the first network address allocated to the node 1.

S409: The node 1 obtains the first network address based on the second message.

It can be learned that, in this embodiment of this application, the node 1 that applies for the address may determine to discover and access the node 2 that has an address allocation service, and receive only the allocated first network address from the node 2. This helps improve network address allocation efficiency, and supports allocation of the local IPv6 address to a node by using a multi-hop mechanism. In addition, the node 1 may further apply for a network address of a specific type. This enriches application scenarios of address allocation.

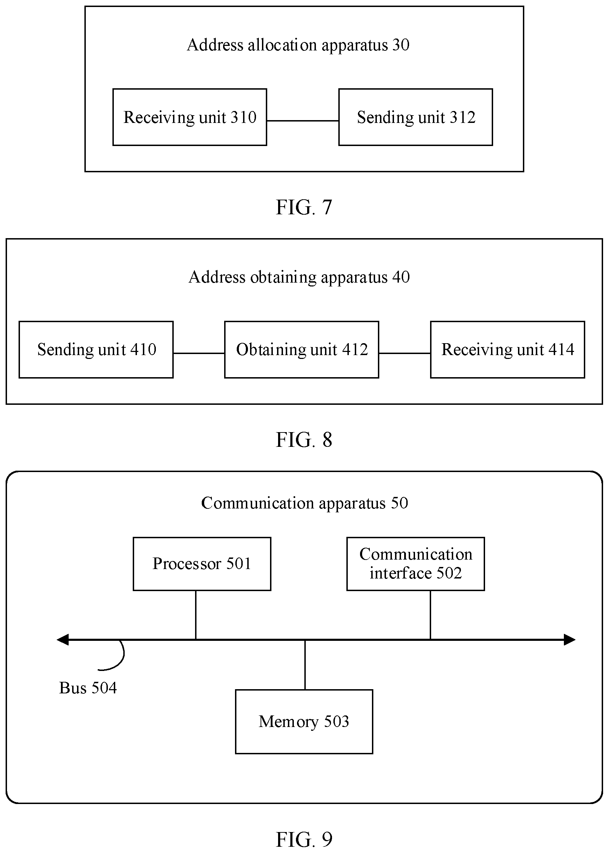

FIG. 7 is a diagram of a structure of an address allocation apparatus according to an embodiment of this application. The address allocation apparatus 30 includes a receiving unit 310 and a sending unit 312. The apparatus 30 may be implemented by hardware, software, or a combination of software and hardware.

The receiving unit 310 is configured to receive a first message sent by a first node, where the first message includes a first type identifier, and the first type identifier indicates a first address type. The sending unit 312 is configured to send a second message to the first node, where the second message includes a first network address allocated to the first node or a service on the first node, and an address type of the first network address is the first address type.

In some possible embodiments, the address allocation apparatus 30 further includes a processing unit (not shown in the figure). The processing unit is configured to obtain the first network address based on the first address type.

The address allocation apparatus 30 may be configured to implement the method on the second node side described in the embodiment in FIG. 3. In the embodiment in FIG. 3, the receiving unit 310 may be configured to perform S101, and the sending unit 312 may be configured to perform S103. Optionally, the processing unit may be configured to perform S102 in the embodiment in FIG. 3. The address allocation apparatus 30 may be further configured to implement the method on the node 2 side described in the embodiments in FIG. 4, FIG. 5, and FIG. 6. For brevity of the specification, details are not described herein again.

One or more of the units in the embodiment shown in FIG. 7 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field-programmable gate array (field-programmable gate array, FPGA), or an application-specific integrated circuit (application-specific integrated circuit, ASIC).

FIG. 8 is a diagram of a structure of an address obtaining apparatus according to an embodiment of this application. The address obtaining apparatus 40 includes a sending unit 410, an obtaining unit 412, and a receiving unit 414. The address obtaining apparatus 40 may be implemented by hardware, software, or a combination of software and hardware.

The sending unit 410 is configured to send a first message to a second node, where the first message includes a first type identifier, and the first type identifier indicates a first address type. The receiving unit 414 is configured to receive a second message sent by the second node, where the second message includes a first network address allocated to a first node or a service on a first node, and an address type of the first network address is the first address type. The obtaining unit 412 is configured to obtain the first network address based on the second message.

The address obtaining apparatus 40 may be configured to implement the method on the first node side described in the embodiment in FIG. 3. In the embodiment in FIG. 3, the sending unit 410 may be configured to perform S101, the receiving unit 414 may be configured to perform S103, and the obtaining unit 412 may be configured to perform S104. The address obtaining apparatus 40 may be further configured to implement the method on the node 1 side described in the embodiments in FIG. 4, FIG. 5, and FIG. 6. For brevity of the specification, details are not described herein again.

One or more of the units in the embodiment shown in FIG. 8 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field programmable gate array (field programmable gate array, FPGA), or an application-specific integrated circuit (application-specific integrated circuit, ASIC).

FIG. 9 is a diagram of a structure of a communication apparatus according to an embodiment of this application. As shown in FIG. 9, the communication apparatus 50 includes a processor 501, a communication interface 502, a memory 503, and a bus 504. The processor 501, the memory 503, and the communication interface 502 communicate with each other through the bus 504.

It should be understood that quantities of processors and memories in the communication apparatus 50 are not limited in this application.

In a specific implementation, the communication apparatus 50 may be the first node that applies for the address in the foregoing embodiment, the first node may be, for example, a user terminal in a vehicle in a vehicle-mounted communication scenario, and the user terminal may be, for example, a mobile phone, a tablet computer, a palmtop computer, a desktop computer, an earphone, a speaker, a wearable device, a vehicle-mounted device, a virtual reality device, or an augmented reality device. For example, the first node may also be a home device in a smart home scenario, for example, may be a television, a robotic vacuum cleaner, a printer, a projector, a user mobile phone, a rice cooker, a speaker, a microphone, or a wireless router. The first node may alternatively be, for example, a BMU in a battery management system BMS scenario. In some possible embodiments, the first node may alternatively be a component in the user terminals or a component in the home devices. The component may be, for example, a board, a line card, or a chip.

In another specific implementation, the communication apparatus 50 may be a second node that has an address allocation function in the foregoing embodiment, and the second node may be, for example, a T-Box in a vehicle-mounted communication scenario or a component in a T-Box, for example, a board, a line card, or a chip. The second node may also be, for example, a gateway, a user terminal device CPE, a wireless router, or a user mobile phone in a smart home scenario. Alternatively, the second node may be, for example, a BCU or a BMU in a battery management system BMS scenario. This is not specifically limited herein.

The bus 504 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 8. However, it does not mean that there is only one bus or only one type of bus. The bus 504 may include a path for transmitting information between components (for example, the memory 503, the processor 501, and the communication interface 502) of the communication apparatus 50.

The processor 501 may include any one or more of processors such as a central processing unit (central processing unit, CPU), a microprocessor (microprocessor, MP), or a digital signal processor (digital signal processor, DSP).

The memory 503 is configured to provide storage space, and the storage space may store data, for example, an operating system and a computer program. The memory 503 may be one or a combination of a random access memory (random access memory, RAM), an erasable programmable read-only memory (erasable programmable read-only memory, EPROM), a read-only memory (read-only memory, ROM), a compact disc read-only memory (compact disc read-only memory, CD-ROM), or the like. The memory 503 may exist independently, or may be integrated into the processor 501.

The communication interface 502 may be configured to provide an information input or output for the processor 501. Alternatively, the communication interface 502 may be configured to receive data sent from the outside and/or send data to the outside, and may be a wired link interface including an Ethernet cable, or may be a wireless link (for example, Wi-Fi, Bluetooth, or universal wireless transmission) interface. Alternatively, the communication interface 502 may further include a transmitter (for example, a radio frequency transmitter or an antenna), a receiver, or the like coupled to the interface.

The processor 501 in the communication apparatus 50 is configured to read the computer program stored in the memory 503, and is configured to perform the foregoing method, for example, the method described in FIG. 3, FIG. 4, FIG. 5, or FIG. 6.

In a possible design manner, the communication apparatus 50 may be one or more modules in an execution body for performing the method on the first node side shown in FIG. 3. The processor 501 may be configured to read one or more computer programs stored in the memory, to perform the following operations:
sending a first message to a second node by using the sending unit 410, where the first message includes a first type identifier, and the first type identifier indicates a first address type;
receiving, by using the receiving unit 414, a second message sent by the second node, where the second message includes a first network address allocated to the first node or a service on the first node, and an address type of the first network address is the first address type; and
obtaining the first network address based on the second message.

In a possible design manner, the communication apparatus 50 may be one or more modules in an execution body for performing the method on the second node side shown in FIG. 3. The processor 501 may be configured to read one or more computer programs stored in the memory, to perform the following operations:
receiving, by using the receiving unit 310, a first message sent by the first node, where the first message includes a first type identifier, and the first type identifier indicates a first address type; and
sending a second message to the first node by using the sending unit 312, where the second message includes a first network address allocated to the first node or a service on the first node, and an address type of the first network address is the first address type.

An embodiment of this application further provides a communication system. The communication system includes a first apparatus and a second apparatus. The first apparatus may be, for example, the address obtaining apparatus 40 shown in FIG. 8 or the communication apparatus 50 used as the first node shown in FIG. 9. The second apparatus may be, for example, the address allocation apparatus 30 shown in FIG. 7 or the communication apparatus 50 used as the second node shown in FIG. 9. The first apparatus may be configured to perform the method on the first node side shown in the embodiment in FIG. 3, and the second apparatus may be configured to perform, for example, the method on the second node side shown in the embodiment in FIG. 3. In some possible embodiments, the communication system may be further configured to perform the method shown in FIG. 4, FIG. 5, or FIG. 6.

In the foregoing embodiments in this specification, the descriptions of each embodiment have respective focuses. For a part that is not described in detail in an embodiment, refer to related descriptions in another embodiment.

It should be noted that a person of ordinary skill in the art may see that, all or a part of the steps in each method of the foregoing embodiments may be implemented by a program instructing related hardware. The program may be stored in a computer-readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read Only Memory, EPROM), a one-time programmable read-only memory (One-time Programmable Read-Only Memory, OTPROM), an electrically-erasable programmable read-only memory, (Electrically-Erasable Programmable Read-Only Memory, EEPROM), a compact disc read-only memory (Compact Disc Read-Only Memory, CD-ROM), or another optical disk memory, magnetic disk memory, magnetic tape memory, or any other computer-readable medium that can be configured to carry or store data.

The technical solutions of this application essentially, or the part contributing to the conventional technology, or all or some of the technical solutions may be implemented in a form of a software product. A computer program product is stored in a storage medium and includes several instructions for instructing a device (which may be a personal computer, a server, or a network device, a robot, a single-chip microcomputer, a chip, a robot, or the like) to perform all or some of the steps of the methods described in embodiments of this application.

## Claims

1. An address allocation method, wherein the method comprises:
receiving a first message sent by a first node, wherein the first message comprises a first type identifier, and the first type identifier indicates a first address type; and
sending a second message to the first node, wherein the second message comprises a first network address allocated to the first node or a service on the first node, and an address type of the first network address is the first address type.

2. The method according to claim 1, wherein the method is applied to a second node, and the first node and the second node belong to a first communication domain.

3. The method according to claim 2, wherein the first address type is a communication domain address or an IP address.

4. The method according to any one of claims 1 to 3, wherein the method further comprises:
obtaining the first network address based on the first address type.

5. The method according to claim 4, wherein the first message further comprises an identity of the first node, and the obtaining the first network address based on the first address type comprises:
obtaining the first network address based on a first mapping relationship, wherein the first mapping relationship represents a mapping relationship among the identity of the first node, the first network address, and the first address type, wherein
the first mapping relationship belongs to a set comprising a mapping relationship among an identity of a node to which a network address is allocated, the network address of the node, and an address type of the network address of the node.

6. The method according to claim 4, wherein the first message further comprises an identity of the first node and an identifier of a first service on the first node, and the obtaining the first network address based on the first address type comprises:
obtaining the first network address based on a second mapping relationship, wherein the second mapping relationship represents a mapping relationship among the identity of the first node, the identifier of the first service, the first network address, and the first address type, wherein
the second mapping relationship belongs to a set comprising a mapping relationship among an identifier of a service to which a network address is allocated, the network address of the service, an address type of the network address of the service, and an identity of a node on which the service is located.

7. The method according to claim 4, wherein the obtaining the first network address based on the first address type comprises:
allocating the first network address based on the first address type.

8. The method according to claim 4, wherein the first message further comprises an identifier of a first service on the first node, and the obtaining the first network address based on the first address type comprises:
obtaining, based on the first address type and the identifier of the first service, the first network address allocated to the first service.

9. The method according to claim 3, wherein the first address type is the IP address, and the method further comprises:
sending a third message to a dynamic host configuration protocol DHCP server, wherein the third message comprises the first type identifier, and the third message further comprises one or more of the following: an identity of the first node and an identifier of a first service on the first node; and
receiving a fourth message sent by the DHCP server, wherein the fourth message comprises the first network address, and the first network address is allocated by the DHCP server based on the third message.

10. The method according to claim 2 or 3, wherein the method further comprises:
sending a third message to a third node, wherein the third message comprises the first type identifier, the third message further comprises one or more of the following: an identity of the first node and an identifier of a first service on the first node, and the third node is a management node in the first communication domain; and
receiving a fifth message sent by the third node, wherein the fifth message comprises the first network address, and the first network address is allocated by the third node based on the third message.

11. The method according to claim 2 or 3, wherein the first communication domain comprises a plurality of management nodes, and the method further comprises:
sending a third message to the plurality of management nodes, wherein the third message comprises the first type identifier, and the third message further comprises one or more of the following: an identity of the first node and an identifier of a first service on the first node;
receiving sixth messages sent by the plurality of management nodes, wherein the sixth message corresponding to the management node comprises a network address allocated by the management node based on the third message; and
obtaining the first network address based on a sixth message sent by a target management node in the plurality of management nodes.

12. The method according to claim 3, wherein the first address type is the IP address, and the method further comprises:
obtaining a historically allocated second network address, wherein the second network address is a network address that is used by the first node in the first communication domain and whose address type is the communication domain address; and
obtaining the first network address based on an IPv6 prefix of the first communication domain and the second network address.

13. The method according to claim 3, wherein the first address type is the IP address, and the method further comprises:
allocating a second network address to the first node, wherein an address type of the second network address is the communication domain address; and
obtaining the first network address based on an IPv6 prefix of the first communication domain and the second network address.

14. The method according to claim 3, wherein the first address type is the IP address, and the method further comprises:
sending a third message to a fourth node, wherein the third message comprises the first type identifier and an identity of the first node, and the fourth node is a management node in the first communication domain; and
receiving a seventh message sent by the fourth node, wherein the seventh message comprises the first network address, the first network address comprises an IPv6 prefix of the first communication domain and a second network address, the second network address is a network address that is used by the first node in the first communication domain and whose address type is the communication domain address, and the first network address is allocated by the fourth node based on the third message.

15. The method according to any one of claims 1 to 14, wherein the first message further comprises at least one of the following information:
unicast address identification information, indicating that the first network address is a unicast address;
multicast address identification information, indicating that the first network address is a multicast address;
anycast address identification information, indicating that the first network address is an anycast address; or
quantity identification information, indicating a quantity of applied first network addresses.

16. The method according to any one of claims 1 to 15, wherein the method further comprises:
receiving an eighth message sent by the first node, wherein the eighth message comprises a second type identifier, the second type identifier indicates a second address type, and the second address type is different from the first address type; and
sending a ninth message to the first node, wherein the ninth message comprises a third network address allocated to the first node or the service on the first node, and an address type of the third network address is the second address type.

17. An address allocation method, applied to a first node, wherein the method comprises:
sending a first message to a second node, wherein the first message comprises a first type identifier, and the first type identifier indicates a first address type;
receiving a second message sent by the second node, wherein the second message comprises a first network address allocated to the first node or a service on the first node, and an address type of the first network address is the first address type; and
obtaining the first network address based on the second message.

18. The method according to claim 17, wherein the first node and the second node belong to a first communication domain.

19. The method according to claim 17 or 18, wherein the first address type is a communication domain address or an IP address.

20. The method according to claim 19, wherein the first address type is the IP address, the first network address is an IPv6 address locally used by the first node, the first network address comprises an IPv6 prefix of the first communication domain and a second network address, and the second network address is a network address that is used by the first node in the first communication domain and whose address type is the communication domain address.

21. The method according to any one of claims 17 to 19, wherein the first message further comprises an identifier of a first service on the first node, and the first network address is allocated to the first service.

22. The method according to any one of claims 17 to 21, wherein the first message further comprises at least one of the following information:
an identity of the first node;
unicast address identification information, indicating that the first network address is a unicast address;
multicast address identification information, indicating that the first network address is a multicast address;
anycast address identification information, indicating that the first network address is an anycast address; or
quantity identification information, indicating a quantity of applied first network addresses.

23. The method according to any one of claims 17 to 22, wherein the method further comprises:
sending a third message to the second node, wherein the third message comprises a second type identifier, the second type identifier indicates a second address type, and the second address type is different from the first address type;
receiving a fourth message sent by the second node, wherein the fourth message comprises a third network address allocated to the first node or the service on the first node, and an address type of the third network address is the second address type; and
obtaining the third network address based on the fourth message.

24. An address allocation apparatus, wherein the apparatus comprises a processing unit and a communication unit, and the communication apparatus is configured to implement the method according to any one of claims 1 to 16.

25. An address obtaining apparatus, wherein the apparatus comprises a processing unit and a communication unit, and the communication apparatus is configured to implement the method according to any one of claims 17 to 23.

26. A communication apparatus, wherein the communication apparatus comprises at least one processor and a communication interface, wherein
the communication interface is configured to receive and/or send data, and/or the communication interface is configured to provide input and/or output for the processor; and
the at least one processor is configured to implement the method according to any one of claims 1 to 16, or is configured to implement the method according to any one of claims 17 to 23.

27. A system, wherein the system comprises at least a first apparatus and a second apparatus, wherein
the first apparatus comprises the address obtaining apparatus according to claim 25; and
the second apparatus comprises the address allocation apparatus according to claim 24.

28. A terminal, wherein the terminal comprises the apparatus according to any one of claims 24 to 26, or comprises the system according to claim 27.

29. A computer-readable storage medium, wherein the computer-readable storage medium stores instructions, and when the instructions are run on at least one processor, the method according to any one of claims 1 to 16 is implemented, or the method according to any one of claims 17 to 23 is implemented.
